# EUROPEAN PATENT APPLICATION

(11) **EP 4 292 908 A1**
(43) Date of publication of application: **20.12.2023**
(21) Application number: 22882649.1
(22) Date of filing: 09.10.2022
(51) Int. Cl.: B62D 25/20, B60K 1/04, B60K 11/02

(54) **LOWER VEHICLE BODY ARCHITECTURE STRUCTURE**

(30) Priority: 18.10.2021 CN 202122503074 U; 18.10.2021 CN 202111210903; 18.10.2021 CN 202122501090 U; 17.01.2022 CN 202220118924 U; 17.01.2022 CN 202220133604 U
(71) Applicant: Zhejiang Geely Holding Group Co., Ltd., Hangzhou, Zhejiang 310051 (CN); ZHEJIANG LEVC R & D CO., LTD., Zhejiang 315336 (CN)
(72) Inventor: SONG, Yadong, Hangzhou, Zhejiang 310051 (CN); DU, Jinxing, Hangzhou, Zhejiang 310051 (CN); SUN, Kaijun, Hangzhou, Zhejiang 310051 (CN); IAN HEWLETT, Carl, Hangzhou, Zhejiang 310051 (CN); LU, Jinhe, Hangzhou, Zhejiang 310051 (CN); NAN, Shengliang, Hangzhou, Zhejiang 310051 (CN)
(74) Representative: Dai, Simin
(86) International application number: PCT/CN2022/124023
(87) International publication number: WO 2023/066039

(57) **Abstract**

Disclosed are an underbody architecture structure and a vehicle having same. The underbody architecture structure includes a front engine compartment architecture, where the front engine compartment architecture includes a front anti-collision beam assembly (1), a front column assembly (2), a front longitudinal beam assembly (4), and a front floor assembly (7), where the front anti-collision beam assembly (1) includes a front anti-collision beam (101) and an energy-absorbing box (102, 10201), where the front anti-collision beam (101) is connected to the front longitudinal beam assembly (4) through the energy-absorbing box (102, 10201), and a bottom of the front column assembly (2) is connected to the energy-absorbing box (102, 10201). The underbody architecture structure absorbs more energy during vehicle collision, and is more stable and more safe.

## Description

### CROSS REFERENCE TO RELATED APPLICATIONS

The present application claims the priority of the Chinese patent application with application number CN2021112109039 and application date October 18, 2021, the priority of the Chinese patent application with application number CN2021225010900 and application date October 18, 2021, the priority of the Chinese patent application with application number CN2021225030745 and application date October 18, 2021, the priority of the Chinese patent application with application number CN2022201336043 and application date January 17, 2022, and the priority of the Chinese patent application with application number CN2022201189241 and application date of January 17, 2022. The contents of the above Chinese patent applications are incorporated herein by reference.

### TECHNICAL FIELD

The present disclosure relates to the technical field of pure electric-energy vehicles, in particular to underbody architecture structures of pure electric-energy vehicles.

### BACKGROUND

With the development of society, more and more vehicles enter the family, and potential traffic accidents are threats to health and life.

For some vehicle models, force transmission structures of a front engine compartment are less, and in an event of a collision, energy generated by the collision is insufficiently transmitted to the underbody, which will cause collision deformation of the front engine compartment, and in serious cases will endanger lives of people in a front row of the vehicle. Therefore, it is necessary to provide a new underbody architecture structure.

### SUMMARY

In the first aspect, the present disclosure provides an underbody architecture structure, including a front engine compartment architecture, where the front engine compartment architecture includes a front anti-collision beam assembly, a front column assembly, a front longitudinal beam assembly, and a front floor assembly, where the front anti-collision beam assembly includes a front anti-collision beam, a first energy-absorbing box, and a second energy-absorbing box, where the front anti-collision beam is connected to the front longitudinal beam assembly through the first energy-absorbing box and the second energy-absorbing box, and a bottom of the front column assembly is connected to the first energy-absorbing box and the second energy-absorbing box.

In an embodiment, the underbody architecture structure further includes a mid and rear floor architecture, where the mid and rear floor architecture includes a mid floor, a rear floor, a seat pit, a mid floor frame structure, and a battery pack, where the mid floor frame structure includes a crossbeam component and a longitudinal beam component, the battery pack is installed below the crossbeam component, the mid floor is installed above the crossbeam component, the mid floor, the rear floor, and the seat pit are sequentially connected, the crossbeam component, the battery pack, the mid floor, the rear floor and the seat pit are supported by the longitudinal beam component, and the mid floor is connected to the front floor assembly.

In an embodiment, the longitudinal beam component includes a first sill beam and a second sill beam, the crossbeam component includes a first mid floor crossbeam, a second mid floor crossbeam and a third mid floor crossbeam, where two ends of each of the first mid floor crossbeam, the second mid floor crossbeam and the third mid floor crossbeam are respectively connected to the first sill beam and the second sill beam through mid floor crossbeam connection brackets.

In an embodiment, each of the first sill beam and the second sill beam is provided with longitudinal beam battery pack fixing points, and each of the first mid floor crossbeam, the second mid floor crossbeam and the third mid floor crossbeam is provided with crossbeam battery pack fixing points, and the battery pack is fixed to the longitudinal beam battery pack fixing points and the crossbeam battery pack fixing points.

In an embodiment, each of the first sill beam and the second sill beam is provided with longitudinal beam battery pack fixing points, and the battery pack is fixed to the longitudinal beam battery pack fixing points.

In an embodiment, each of the first sill beam and the second sill beam includes a multi-cavity structure, and each of the first sill beam and the second sill beam includes an crossbeam support part and a battery support part that are interconnected, where the crossbeam support part is located above the battery support part, a cross-section of the crossbeam support part is a hollow quadrilateral, a cross-section of the battery support part is a multi-hole grid, a side of the crossbeam support part is connected to the mid floor crossbeam connection bracket, and a side of the battery support part is connected to the battery pack.

In an embodiment, the battery support part includes a first layer support part, a second layer support part and a bottom connection part that are sequentially connected, where a cross-section of each of the first layer support part, the second layer support part and the bottom connection part includes one or more polygons.

In an embodiment, the mid floor crossbeam connection bracket includes a first horn-shaped connection plate, a second horn-shaped connection plate and a bottom fixing plate, where the bottom fixing plate is fixedly connected to a bottom of the first horn-shaped connection plate and a bottom of the second horn-shaped connection plate to form a U-shaped structure, a top of the first horn-shaped connection plate and a top of the second horn-shaped connection plate are connected with the first mid floor crossbeam, the second mid floor crossbeam or the third mid floor crossbeam, and a side of the first horn-shaped connection plate and a side of the second horn-shaped connection plate are connected with the first sill beam or the second sill beam.

In an embodiment, a cross-section of the first energy-absorbing box is rectangle, and middles of two sides of the rectangle are provided with recesses that are close to each other.

In an embodiment, a middle of a side of the rectangle is provided with a recess.

In an embodiment, four corners of the rectangle are curved corners.

In an embodiment, a bottom of the front column assembly is provided with a connection claw, where the connection claw include a connection column, a first connection plate and a second connection plate, where the first connection plate and the second connection plate are respectively connected on two sides of the connection column, and the first connection plate and the second connection plate are further connected to the first energy-absorbing box and are located above the recesses.

In an embodiment, the connection claw is connected to a middle of the first energy-absorbing box.

In an embodiment, the front column assembly further includes a first column, a second column, a column crossbeam, an outer connecting rod, and an inner connecting rod, where two ends of the column crossbeam are respectively connected to the first column and the second column, a bottom of each of the first column and the second column is provided with the connection claw, one end of the outer connecting rod is connected to a middle of the column crossbeam, and the other end is connected to the front anti-collision beam, one end of the inner connecting rod is connected to the first column, and the other end of the inner connecting rod is connected to the first energy-absorbing box and located at a connection between the first energy-absorbing box and the front longitudinal beam assembly; or, one end of the inner connecting rod is connected to the second column, and the other end of the inner connecting rod is connected to the second energy-absorbing box and is located at a connection between the second energy-absorbing box and the front longitudinal beam assembly.

In an embodiment, an end face of the first energy-absorbing box close to the front longitudinal beam assembly is provided with an energy-absorbing box connection plate, and an end face of the front longitudinal beam assembly close to the first energy-absorbing box is provided with a longitudinal beam connection plate, where the longitudinal beam connection plate is connected to the energy-absorbing box connection plate through a thread connection.

In an embodiment, the front longitudinal beam assembly includes an engine compartment longitudinal beam and a longitudinal beam connection member that are interconnected, where the engine compartment longitudinal beam is connected to the first energy-absorbing box, the engine compartment longitudinal beam is a hollow structure, and a cross-sectional area of the first energy-absorbing box is smaller than a cross-sectional area of the engine compartment longitudinal beam.

In an embodiment, a cross-section of the engine compartment longitudinal beam is trapezoidal.

In an embodiment, the front engine compartment architecture further includes a cowl panel assembly and an A-pillar inner panel assembly, where a side of the front longitudinal beam assembly is connected to the A-pillar inner panel assembly, the cowl panel assembly is connected to the front longitudinal beam assembly, and the front floor assembly is installed on the front longitudinal beam assembly.

In an embodiment, the underbody architecture structure further includes a water tank mounting bracket, where the water tank mounting bracket includes an upper crossbeam, a first mounting bracket and a second mounting bracket, where a first end of the first mounting bracket and a first end of the second mounting bracket are respectively connected to two ends of the upper crossbeam, a second end of the first mounting bracket and a second end of the second mounting bracket are respectively connected to the first energy-absorbing box and the second energy-absorbing box.

In an embodiment, the first mounting bracket includes a first connecting member and a first fixing member that are interconnected, where the first connecting member is connected to the upper crossbeam, and the first fixing member is connected to the first energy-absorbing box; and the second mounting bracket includes a second connecting member and a second fixing member that are interconnected, where the second connecting member is connected to the upper crossbeam, and the second fixing member is connected to the second energy-absorbing box.

In an embodiment, the first fixing member includes a first receiving section and first limiting sections oppositely located at two ends of the first receiving section, where the first receiving section is fixedly connected to the first connecting member, and the first limiting sections are fixedly connected to the first energy-absorbing box; and the second fixing member includes a second receiving section and second limiting sections oppositely located at two ends of the second receiving section, where the second receiving section is fixedly connected to the second connecting member, and the second limiting sections are fixedly connected to the second energy-absorbing box.

In an embodiment, the first receiving section and the first limiting sections are an integrated structure, and the second receiving section and the second limiting sections are an integrated structure.

In an embodiment, the first connecting member is provided with a first installation part, the upper crossbeam is provided with a first connection part corresponding to the first installation part, and the first installation part is connected to the first connection part; and the second connecting member is provided with a second installation part, the upper crossbeam is provided with a second connection part corresponding to the second installation part, and the second installation part is connected to the second connection part.

In an embodiment, the first installation part and the second installation part are weld nuts, the first connection part and the second connection part are connection holes, the first connecting member is fixedly connected to the upper crossbeam through a bolt, and the second connecting member is fixedly connected to the upper crossbeam through a bolt.

In an embodiment, each of the first connecting member and the second connecting member is further provided with a backing plate, where when the first connecting member is fixed with the upper crossbeam, the backing plate is located between the first connecting member and the upper crossbeam, and when the second connecting member is fixed with the upper crossbeam, the backing plate is located between the second connecting member and the upper crossbeam.

In an embodiment, the first connecting member includes two first connecting sections opposite to each other, where the two first connecting sections enclose to form a hollow frame; and the second connecting member includes two second connecting sections opposite to each other, where the two second connecting sections enclose to form a hollow frame.

In an embodiment, the underbody architecture structure further includes a water tank, where an upper part of the water tank is connected to the upper crossbeam through a buffer member, and two sides of the water tank are respectively connected to the first energy-absorbing box and the second energy-absorbing box through a first support member and a second support member.

In an embodiment, the upper part of the water tank is provided with a connecting pin, and the upper crossbeam is provided with a connecting port, where the connecting pin is fixed to the connecting port through the buffer member such that the water tank is fixed with the upper crossbeam.

In an embodiment, the buffer member is provided with a clamping part, and the connecting pin is connected to the buffer member through the clamping part.

In an embodiment, a material of the clamping part is a cushioning material.

In an embodiment, the first support member includes a first water tank connection part and a first support part that are interconnected, and the second support member includes a second water tank connection part and a second support part that are interconnected, where the first water tank connection part and the second water tank connection part are respectively connected to two sides of the water tank through fasteners, and the first support part and the second support part are respectively connected to the first energy-absorbing box and the second energy-absorbing box through fasteners.

In an embodiment, the water tank is inclined towards a rear of a vehicle.

In the second aspect, the present disclosure provides a vehicle including the underbody architecture structure according to any one of the above embodiments.

In the embodiments of the present disclosure, for the front engine compartment architecture, a front anti-collision beam is connected to the front longitudinal beam assembly through an energy-absorbing box to form a force transmission path. The energy-absorbing box shrinks when impacted, thereby achieving energy-absorbing effect. The energy-absorbing box is further connected and fixed with the front column assembly, which can more stably support the energy-absorbing box, allowing the energy-absorbing box to have a longer length to absorb more energy when impacted, which is more stability and safety.

In the embodiments of the present disclosure, for the mid and rear floor architecture, based on a pure electric-energy architecture, the position of the battery pack is set closer to the front and is set at the middle of the architecture, providing a lower-level space for a sunken structure of a hidden flipping seat at the rear. At the same time, the battery pack is installed below the crossbeam component, which not only enhances the stiffness of the vehicle by utilizing the structural strength of the battery pack, but also forms an installation plane above the crossbeam component. Therefore, a flat floor can be used, and the flat floor can further help to hide the sunken structure of the seat, increasing a load-bearing plane of the vehicle body. At the same time, due to a better collision energy-absorbing effect of the front engine compartment architecture provided in the embodiments of the present disclosure, the length of the front engine compartment architecture can be set to be shorter, which further increases the bearing space of the vehicle body in conjunction with the mid and rear floor architecture.

In the embodiments of the present disclosure, for a front anti-collision force transmission of the vehicle body, only two longitudinal sill beams are set to carry the front anti-collision force transmission, and no other longitudinal beams are set, thus, achieving lightweight design. The three mid floor crossbeams have no specification limitations by other longitudinal beams and can be shared to achieve universalization. The three crossbeams are arranged at a lower part to achieve good side collision force support, and the sill beams use multi-cavity aluminum extrudates to achieve good structural strength, side impact bending resistance and column impact energy absorbing.

In the embodiments of the present disclosure, the left and right sill beams are designed to be relatively tall and arranged with a large spacing to achieve a wider and taller battery pack layout. In order to install the battery, the left and right sill beams are respectively provided with longitudinal beam battery pack fixing points. The battery pack is fixed with the underbody architecture structure through the longitudinal beam battery pack fixing points, so that the battery and the vehicle body are integrated, greatly improving the torsional and bending stiffness of the vehicle body, which is better than that of fuel vehicles and other electric vehicles.

In the embodiments of the present disclosure, the rear is the flat floor and seats can be flipped into a pit. The longitudinal beams and crossbeams of the rear floor are arranged at the bottom to achieve a fully flat floor at the top, and the rear is designed with a deep pit, which can store materials and achieve seat flipping into the pit to achieve a flat floor at the top. With this flipped seat reinforcement and filling, the rear crashworthiness is greatly improved, and the rear NVH (Noise, Vibration, Harshness) features and noise suppression have a better performance.

In the embodiments of the present disclosure, the seat pit region is designed in a modular manner, and steel plates can be used to cover the seat pit region for different vehicles to realize rapid switching of vehicles with different purposes.

In the embodiments of the present disclosure, the energy-absorbing box is more than twice as long as other vehicles, achieving more collision energy absorbing. The large-cross-section energy-absorbing box design further ensures higher rigidity, better energy absorbing, and better load-bearing capacity. The large-cross-section engine compartment longitudinal beam ensures good strength, stiffness, and load-bearing capacity, and can further maintain stable force transmission in medium-to-low-speed collisions, and can further achieve bending for secondary energy absorbing in high-speed collisions, ensuring the safety of passenger compartment intrusion.

The underbody architecture provided in the embodiments of the present disclosure meets the five-star requirements of ENCAP (European New Car Assessment Program) and CNCAP (China New Car Assessment Program), setting a technical benchmark in the domestic market and meeting the increasing safety concerns of domestic customers. In the international market, the underbody architecture provided in the embodiments of the present disclosure surpasses the safety level of mainstream competitors and meets the company's strategy of developing international-level cars.

### BRIEF DESCRIPTION OF THE DRAWINGS

FIG. 1 is a schematic diagram of an overall structure of an underbody architecture structure according to embodiments of the present disclosure.
FIG. 2 is a schematic diagram of an overall structure of a mid and rear floor architecture according to embodiments of the present disclosure.
FIG. 3 is a structural diagram of a bottom beam frame of a mid and rear floor architecture according to embodiments of the present disclosure.
FIG. 4 is a schematic diagram of a distribution of battery pack fixing points in FIG. 3.
FIG. 5 is a diagram of a cross-section along the A-A line in FIG. 3.
FIG. 6 is a diagram of a cross-section along the C-C line in FIG. 3.
FIG. 7 is a schematic diagram of a structure of a seat pit according to embodiments of the present disclosure.
FIG. 8 is a schematic diagram of a side impact force transmission direction for a mid and rear floor architecture according to embodiments of the present disclosure.
FIG. 9 is a diagram of a cross-section along the B-B line in FIG. 8.
FIG. 10 is an exploded schematic diagram of connecting parts between a sill beam and a mid floor crossbeam according to embodiments of the present disclosure.
FIG. 11 is a three-dimensional structural schematic diagram of a front engine compartment architecture provided in embodiments of the present disclosure.
FIG. 12 is a cross-sectional view of a front engine compartment architecture according to embodiments of the present disclosure, with a dashed region representing an energy-absorbing box.
FIG. 13 is a diagram of a cross-section along the A-A line in FIG. 12.
FIG. 14 is a diagram of a cross-section along the B-B line in FIG. 12.
FIG. 15 is a diagram of a cross-section along the C-C line in FIG. 12.
FIG. 16 is a schematic diagram of a connection between a front engine compartment architecture and a front water channel assembly according to embodiments of the present disclosure.
FIG. 17 is a three-dimensional structural schematic diagram of the water tank installation structure assembly according to embodiments of the present disclosure.
FIG. 18 is a schematic diagram of a local structure at a first mounting bracket in FIG. 17.
FIG. 19 is an exploded schematic diagram of a structural in FIG. 17.
FIG. 20 is a schematic diagram of assembly of a buffer member and an upper crossbeam in FIG. 19.
FIG. 21 is a diagram of a cross-section along the A-A line in FIG. 20.
FIG. 22 is a schematic diagram of a structure of a buffer member in FIG. 19.
FIG. 23 is a schematic diagram of assembly of a second support member, a water tank, and a second energy-absorbing box in FIG. 19.
FIG. 24 is a diagram of a cross-section along the B-B line in FIG. 23.

### DETAILED DESCRIPTION

In order to make the purpose, technical solutions and advantages of the embodiments of the present disclosure clearer, the technical solutions in the embodiments of the present disclosure are clearly described below with reference to the accompanying drawings in the embodiments of the present disclosure. The embodiments described are merely some embodiments of the present disclosure, and not all embodiments. Generally, the components in the embodiments of the present disclosure described and illustrated in the accompanying drawings herein can be arranged and designed in a variety of different configurations.

Accordingly, the following detailed description of embodiments of the present disclosure provided in the accompanying drawings is not intended to limit the claimed scope of the present disclosure, but merely represents selected embodiments of the present disclosure. Other embodiments achieved by those skilled in the art based on the embodiments in the present disclosure without paying creative work shall all fall within the scope of protection of the present disclosure.

It should be noted the similar reference signs and letters in the following drawings indicate similar items, therefore, once an item is defined in one drawing, it does not need to be further defined and explained in subsequent drawings.

In the description of the present disclosure, it should be noted that the terms "center", "top", "bottom", "left", "right", "vertical", "horizontal", "inside", "outside", etc. indicate an orientation or a position relationship based on the orientation or position relationship shown in the attached drawings, or an orientation or a position relationship that is commonly placed when the disclosed product is used, solely for the convenience of describing the present disclosure and simplifying the description, instead of indicating or implying that the device or component referred to must have a specific orientation, be constructed and operated in a specific orientation, and therefore cannot be understood as a limitation of the present disclosure.

It should be noted that the terms "first" and "second" are only for descriptive purposes, and cannot be understood as indicating or implying relative importance or implying the quantity of the technical feature indicated. Therefore, features limited by "first" and "second" can explicitly or implicitly include one or more of these features. In the description of the present disclosure, the meaning of "multiple" refers to two or more, unless otherwise specified.

The "and/or" in the present disclosure includes three solutions, taking A and/or B as an example, it includes A technical solution, B technical solution, and a technical solution that includes A and B. In addition, the technical solutions between various embodiments can be combined with each other, but it must be based on that it can be realized by those skilled in the art. When a combination of technical solutions is contradictory or cannot be realized, it should be considered that the combination of the technical solutions does not exist and is not within the scope of protection required by the present disclosure.

Furthermore, the terms "horizontal", "vertical", etc. do not imply that the part is absolutely level or vertical, but may be slightly inclined. For example, "horizontal" only means that the direction is more horizontal than "vertical", and it does not mean that the structure must be completely horizontal, but can be slightly inclined.

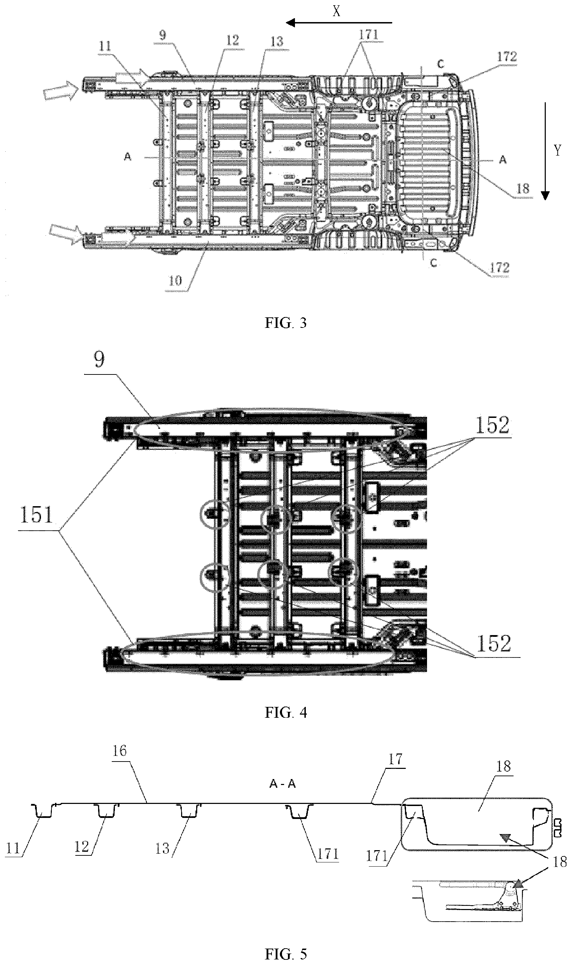

For the convenience of description, the front-to-rear direction of a vehicle is an X direction (such as the direction indicated by the arrow with the X mark in FIG. 3), the left-to-right direction of a vehicle is the Y direction (such as the direction indicated by the arrow with the Y mark in FIG. 3), and the up-to-down direction is the Z direction (i.e. the direction perpendicular to the X and Y directions is the Z direction). It should be noted that describing in the X direction, Y direction or Z direction is only for convenience, and should not be understood as a limitation on the technical solution.

For some vehicle models, force transmission structures of a front engine compartment are less. When a collision occurs, the energy generated by the collision is insufficiently transmitted upward, left and right, and the force transmission is uneven up and down, which will cause collision deformation of the front engine compartment, and in serious cases, will endanger lives of people in a front row of the vehicle.

In the structure of the mid and rear floor, the mid and rear floor is generally not even, and mid floor beams are arranged inside the vehicle. In order to ensure that the entire vehicle can achieve the five-star safety goals of ENCAP and CNCAP, especially for the side collision and the column collision, the sills bear the maximum force, and the interior crossbeams bear the force transmission. For pure electric-energy vehicles, the battery is generally arranged under the front and mid floors, so there is a certain height difference between the interior crossbeams and the sills, so that the overlapping degree between the crossbeams and the sills is low, which is difficult to achieve the star safety goal for collision.

In addition, the current large MPV (Multi-Purpose Vehicles) and MPV models for goods or passengers have a basic membership of 7 seats, but the demand for 9 seats is gradually increasing, and more seats require vehicles to have greater carrying space. Therefore, the carrying space of the vehicle is no longer sufficient to meet people's needs.

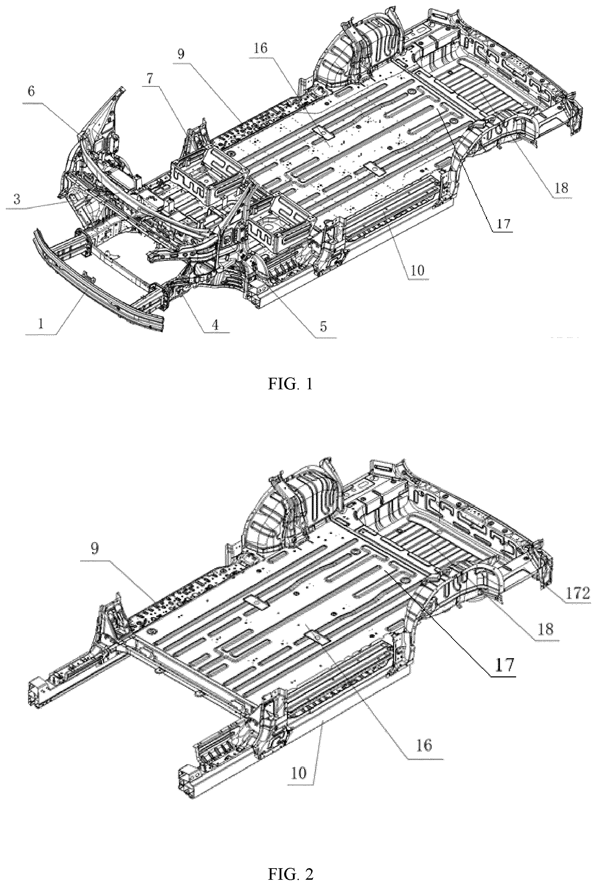

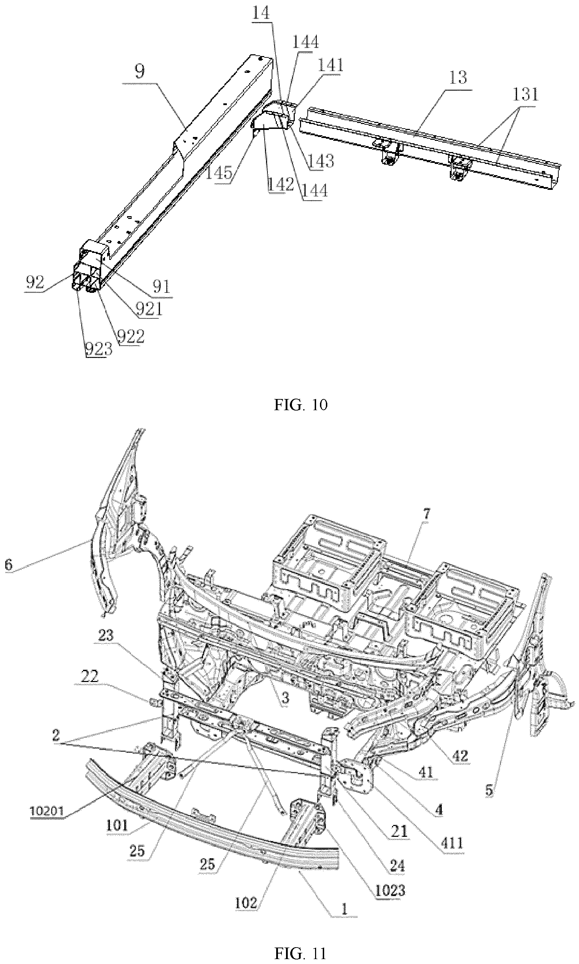

In view of this, as shown in FIGs. 1 and 11, an underbody architecture structure is provided and includes a front engine compartment structure and a mid and rear floor structure. The front engine compartment structure includes a front anti-collision beam assembly 1, a front column assembly 2, a front longitudinal beam assembly 4, and a front floor assembly 7, where the front anti-collision beam assembly 1 includes a front anti-collision beam 101, a first energy-absorbing box 102, and a second energy-absorbing box 10201, where the front anti-collision beam 101 is connected to the front longitudinal beam assembly 4 through the first energy-absorbing box 102 and the second energy-absorbing box 10201, and a bottom of the front column assembly 2 is connected to the first energy-absorbing box 102 and the second energy-absorbing box 10201.

The front anti-collision beam 101 is connected to the front longitudinal beam assembly 4 through the first energy-absorbing box 102 and the second energy-absorbing box 10201, forming a force transmission path. The first energy-absorbing box 102 and the second energy-absorbing box 10201 collapse/shrink during a front collision, achieving energy-absorbing effect. The first energy-absorbing box 102 and the second energy-absorbing box 10201 are further connected and fixed by the front column assembly 2, so that the first energy-absorbing box 102 and the second energy-absorbing box 10201 are more stably supported, and the first energy-absorbing box 102 and the second energy-absorbing box 10201 can be set to a longer length, resulting in more collision energy absorbing.

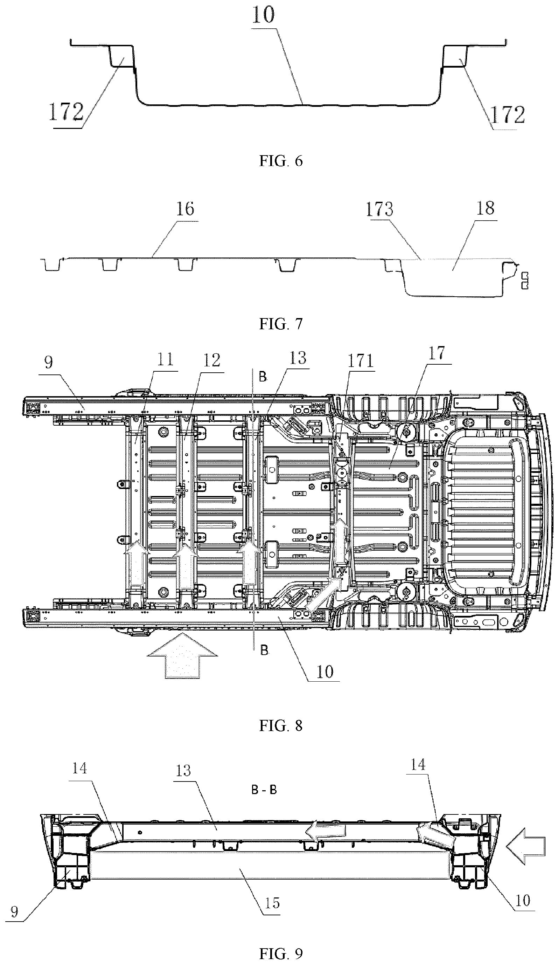

The mid and rear floor architecture includes a mid floor 16, a rear floor 17, a seat pit 18, a mid floor frame structure, and a battery pack 15 (as shown in FIG. 9), where the mid floor frame structure includes a crossbeam component and a longitudinal beam component, the battery pack 15 is installed below the crossbeam component, the mid floor 16 is installed above the crossbeam component, the mid floor 16, the rear floor 17, and the seat pit 18 are sequentially connected, the crossbeam component, the battery pack 15, the mid floor 16, the rear floor 17 and the seat pit 18 are supported by the longitudinal beam component, and the mid floor 16 is connected to the front floor assembly 7.

This embodiment focuses on the system of the electric motor, power battery and electronic control of the EV (Electric Vehicle). In order to solve the collision safety target of a vehicle with a large load and short front suspension, this embodiment uses long energy absorbing boxes and a large-cross-section engine compartment longitudinal beam in the front engine compartment to achieve greater energy-absorbing region. The engine compartment can be bent again to absorb energy, so as to fully absorb energy during high-speed collisions and protect the safety of the passenger compartment. During low-speed collisions, less damaged parts need to be repaired, and the main longitudinal beams are not damaged so as not to affect the safety of the main vehicle structure. In addition, there are fewer large components arranged above the longitudinal beam plane in the engine compartment to prevent hard objects from entering the passenger compartment during collisions.

The mid floor adopts a lightweight and universal design to achieve safe side collision and column collision. The mid floor region provides maximum size space to stabilize and fix the battery pack, and the battery pack is used to further enhance the vehicle-body stiffness, making the stiffness performance higher than that of fuel vehicles and other electric vehicles. The rear floor region adopts a flat floor, and a seat pit is designed at the rear of the rear floor region to achieve multi-purpose and increase storage space. The fourth-row seats can be flipped into the seat pit to make it flush with the front, further greatly improving rear crash resistance. The seat pit region is designed in a modular manner, and steel plates can be used to cover the seat pit region for different vehicles to realize rapid switching of vehicles with different purposes.

Below are specific descriptions of the mid and rear floor architecture and the front engine compartment architecture.

### mid and rear floor architecture

As shown in FIG. 2, FIG. 3, FIG. 5 and FIG. 9, the mid and rear floor architecture includes a mid floor 16, a rear floor 17, a seat pit 18, a mid floor frame structure, and a battery pack 15, where the mid floor frame structure includes a crossbeam component and a longitudinal beam component, the battery pack 15 is installed below the crossbeam component, the mid floor 16 is installed above the crossbeam component, the mid floor 16, the rear floor 17, and the seat pit 18 are sequentially connected, the crossbeam component, the battery pack 15, the mid floor 16, the rear floor 17 and the seat pit 18 are supported by the longitudinal beam component, and the mid floor is connected to the front floor assembly 7.

The mid floor 16 and the rear floor 17 are configured to install the second-row seats and the third-row seats, and the seat pit 18 is configured to install the fourth-row seats.

In this embodiment, the upper surfaces of the mid floor 16 and the rear floor 17 are laid with seat long slide rails. The laying of long seat slide rails can achieve common rails of the second-row seats and the third-row seats sliding together, and the structure is flexible.

To meet the requirements of more passengers traveling together, a seat pit 18 is installed at the rear of the vehicle body, which can be used for folding and storing the fourth-row seats, which can be used for sitting when the fourth-row seats are set in the seat pit, or for providing storage space when the fourth-row seats are folded in the seat pit, or for storing goods in the seat pit when the fourth-row seats are not set to provide greater storage space. The floor of the vehicle body adopts a designed structure of the mid floor 16 and the rear floor 17, which can be laid with long seat slide rails to achieve common rails of the second-row seats and the third-row seats sliding together, realizing large seating space and storage space, flexible and variable. In addition, the battery pack 15 is installed under the crossbeam component and supported by the longitudinal beam component, which not only allows the floor of the vehicle body to be set as the mid floor 16 and the rear floor 17, but also enhances the stiffness of the entire vehicle by utilizing the structural strength of the battery pack 15.

As shown in FIGs. 3, 5, 9, and 10, the longitudinal beam assembly includes a first sill beam 9 and a second sill beam 10, where the first sill beam 9 and the second sill beam 10 include two rear floor longitudinal beams 172 extending to the rear floor 17 and the seat pit 18, and the rear floor longitudinal beams 172 are configured to support the rear floor 17 and the seat pit 18. The crossbeam component includes a first mid floor crossbeam 11, a second mid floor crossbeam 12, and a third mid floor crossbeam 13, where two ends of each of the first mid floor crossbeam 11, the second mid floor crossbeam 12 and the third mid floor crossbeam 13 are respectively connected to the first sill beam 9 and the second sill beam 10 through mid floor crossbeam connection brackets 14.

In this embodiment, the first mid floor crossbeam 11, the second mid floor crossbeam 12, and the third mid floor crossbeam 13 are arranged in parallel with each other, the first sill beam 9 and the second sill beam 10 are arranged in parallel with each other, and the first sill beam 9 and the second sill beam 10 are respectively located on two sides of the first mid floor crossbeam 11, the second mid floor crossbeam 12 and the third mid floor crossbeam 13.

Regarding the installation and fixation of battery pack 15, as shown in FIG. 4, in this embodiment, in addition to the longitudinal beam battery pack fixing points 151 arranged on the first sill beam 9 and the second sill beam 10, each crossbeam is provided with two crossbeam battery pack fixing points 152 to achieve uniform fixing of the battery pack in different regions, so that the battery and the vehicle body are fixed to form an integrated body, and the stability is greatly improved.

In another embodiment, only the longitudinal beam battery pack fixing points 151 are arranged on the first sill beam 9 and the second sill beam 10, and the battery pack is fixed to the underbody architecture structure through the longitudinal beam battery pack fixing points 151.

As shown in FIGs. 3 and 8, the arrows in FIG. 3 indicate the direction and path of the front impact force transmission, while the arrows in FIG. 8 indicate the direction and path of the side impact force transmission. For the front impact force transmission of the vehicle body, only two longitudinal sill beams are set to carry the front impact force transmission, and no other longitudinal beams are set, so that the three mid floor crossbeams have no specification limitations by other longitudinal beams, achieving universalization. In addition, it further takes into account the installation space of the battery. The battery pack 15 is installed under each mid floor crossbeam and connected to the sill beams on both sides. When receiving the side impact force to the vehicle, not only the mid floor crossbeam is used to transmit the side impact force, but also a certain support is achieved through the structure of the battery pack 15. The structural strength of the battery pack 15 is utilized to enhance the stiffness of the vehicle, effectively protecting internal passengers and batteries in collisions.

In addition, as shown in FIGs. 5 and 6, there are two horizontally distributed rear floor crossbeams 171 at the bottom of the rear floor 17, and two longitudinally distributed rear floor longitudinal beams 172 on both sides of the rear floor 17. The two rear floor crossbeams are located at both ends of the rear floor 17, and the rear floor crossbeam located at the tail end of the rear floor 17 further supports the seat pit 18. Both rear floor crossbeams are at the same level as the first mid floor crossbeam 11, the second mid floor crossbeam 12 and the third mid floor crossbeam 13, so that the mid floor 16 is level with the rear floor 17.

The seat pit 18 can be designed to be deeper, allowing for more storage space and further achieving the upper part to be flat after flipping the seats into the pit. The rear crashworthiness is greatly improved, and the rear NVH vibration and noise suppression can further be achieved.

As shown in FIG. 7, for different needs, such as the requirement for an overall flat floor, elements of the seat pit can be directly removed and a flat steel plate 173 can be added to the upper part of the seat pit, which can meet a rapid switching of vehicle models with different needs.

As shown in FIGs. 9 and 10, each of the first sill beam 9 and the second sill beam 10 includes a multi-cavity extrudate structure which can be an aluminium extrudate in this embodiment, and each of the first sill beam 9 and the second sill beam 10 includes an crossbeam support part 91 and a battery support part 92 that are interconnected, where the crossbeam support part 91 is located above the battery support part 92, a cross-section of the crossbeam support part 91 is a hollow quadrilateral, a cross-section of the battery support part 92 is a multi-hole grid, a side of the crossbeam support part 91 is connected to the mid floor crossbeam connection bracket 14, and a side of the battery support part 92 is connected to the battery pack 15.

In this embodiment, each of the first sill beam 9 and the second sill beam 10 includes a crossbeam support part 91 and a battery support part 92. The cross-section of the crossbeam support part 91 includes a hollow quadrilateral, and the cross-section of the battery support part 92 includes a multi-hole grid, as shown in FIG. 8. The arrows in FIG. 8 indicate the direction and path of side impact force transmission. When the vehicle body is subjected to a large side impact force, the crossbeam support part 91 first collapses, to transfer the side impact force to each mid floor crossbeam, reducing the force on battery pack 15. The battery support part 92 is relatively stable, which can provide a certain degree of side impact resistance in conjunction with the battery pack 15, and can also collapse and absorb energy when subjected to excessive side impact force, protecting the battery pack 15.

In this embodiment, the battery support part 92 includes a first layer support part 921, a second layer support part 922 and a bottom connection part 923 that are sequentially connected, where a cross-section of each of the first layer support part 921, the second layer support part 922 and the bottom connection part 923 includes one or more polygons.

In this embodiment, the cross-section of the first layer support part 921 includes two interconnected polygons, the cross-section of the second layer support part 922 includes three sequentially connected polygons, and the cross-section of the bottom connection part 923 includes two polygons.

In this embodiment, as shown in FIG. 10, the mid floor crossbeam connection bracket 14 includes a first horn-shaped connection plate 141, a second horn-shaped connection plate 142 and a bottom fixing plate 143, where the bottom fixing plate 143 is connected to a bottom of the first horn-shaped connection plate 141 and a bottom of the second horn-shaped connection plate 142 to form a U-shaped structure, a top of the first horn-shaped connection plate 141 and a top of the second horn-shaped connection plate 142 are connected with the third mid floor crossbeam 13, and a side of the first horn-shaped connection plate 141 and a side of the second horn-shaped connection plate 142 are connected with the first sill beam 9 or the second sill beam 10. The mid and rear floor architecture includes multiple mid floor crossbeam connection brackets 14, where two ends of each of the first mid floor crossbeam 11, the second mid floor crossbeam 12 and the third mid floor crossbeam 13 are respectively connected to the first sill beam 9 and the second sill beam 10 through mid floor crossbeam connection brackets 14.

The top of each of the first horn-shaped connection plate 141 and the second horn-shaped connection plate 142 is provided with a first connection sheet 144. Both sides of a top of each of the first mid floor crossbeam 11, the second mid floor crossbeam 12 and the third mid floor crossbeam 13 is provided with a second connection sheet 131. The first mid floor crossbeam 11, the second mid floor crossbeam 12 or the third mid floor crossbeam 13 is located between the first horn-shaped connection plate 141 and the second horn-shaped connection plate 142. The second connection sheet 131 is connected to the first connection sheet 144.

The bottom of a side of the first horn-shaped connection sheet 141 and the second horn-shaped connection plate 142 is connected with a third connection sheet 145. The third connection sheet 145 is connected with the first sill beam 9 or the second sill beam 10.

Compared to directly connecting the sill beam with the crossbeam, using a horn-shaped mid floor crossbeam connection bracket 14 can achieve oblique transmission of the side impact force, and when a large side impact force is received, the crossbeam can be bent upward to a certain extent, avoiding damage to the battery. Moreover, the horn-shaped mid floor crossbeam connection bracket 14 can better cooperate with the crossbeam support part 91 in the multi-cavity extrudate structure, achieving a collapse/shrink effect, and in addition, it further makes the connection between the sill beam and the crossbeam more stable.

In this embodiment, the first sill beam 9 and the second sill beam 10 are connected to the battery pack 15 through bolts, and the battery pack 15 and the vehicle body are tightly connected by bolts. The structural strength of the battery pack 15 is used to enhance the stiffness of the whole vehicle, effectively protecting the internal passengers and protecting the battery in an impact.

### front engine compartment architecture

As shown in FIGs. 11-15, the front engine compartment structure includes a front anti-collision beam assembly 1, a front column assembly 2, a cowl panel assembly 3, a front longitudinal beam assembly 4, an A-pillar inner panel assembly 5, an A-pillar inner panel assembly 6 and a front floor assembly 7, where the front anti-collision beam assembly 1 includes a front anti-collision beam 101, a first energy-absorbing box 102, and a second energy-absorbing box 10201, where the front anti-collision beam 101 is connected to the front longitudinal beam assembly 4 through the first energy-absorbing box 102 and the second energy-absorbing box 10201, and a bottom of the front column assembly 2 is connected to the first energy-absorbing box 102 and the second energy-absorbing box 10201. Two sides of the front longitudinal beam assembly 4 are respectively connected to the A-pillar inner panel assembly 5 and A-pillar inner panel assembly 6. The front floor assembly 7 is installed on the front longitudinal beam assembly 4.

The front anti-collision beam 101 is connected to the front longitudinal beam assembly 4 through the first energy-absorbing box 102 and the second energy-absorbing box 10201, forming a force transmission path. The first energy-absorbing box 102 and the second energy-absorbing box 10201 collapse/shrink during a front collision, achieving energy-absorbing effect. The first energy-absorbing box 102 and the second energy-absorbing box 10201 are further connected and fixed by the front column assembly 2, so that the first energy-absorbing box 102 and the second energy-absorbing box 10201 are more stably supported, and the first energy-absorbing box 102 and the second energy-absorbing box 10201 can be set to a longer length, resulting in more collision energy absorbing. In this embodiment, the first energy-absorbing box 102 and the second energy-absorbing box 10201 are more than twice as long as other vehicles.

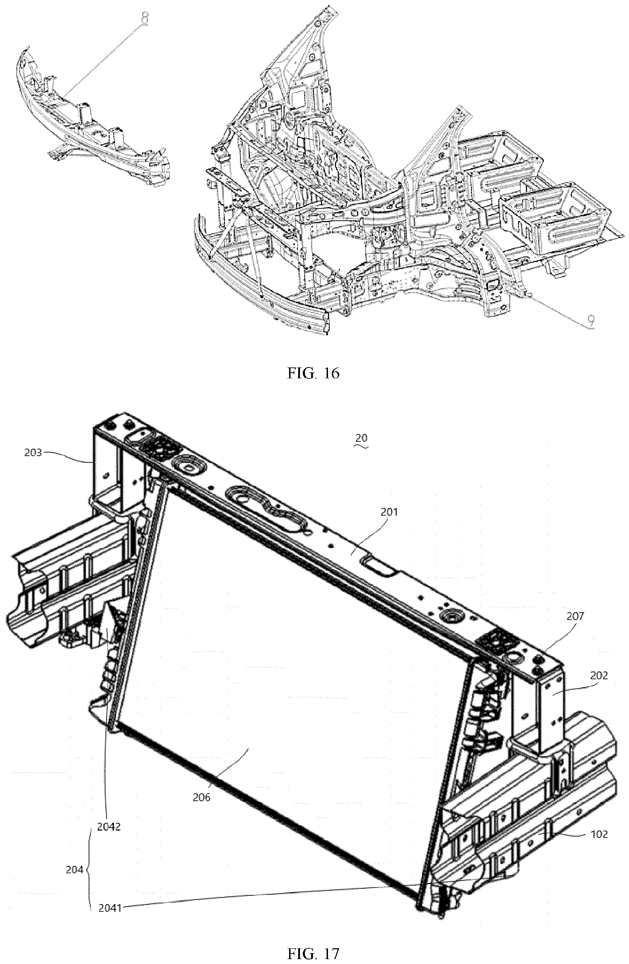

In addition, as shown in FIG. 16, the front engine compartment structure of the vehicle can be used as a universal basic structure for the front engine compartment. When applied to different vehicle models, the front engine compartment structure does not need to be adjusted. The changes of different vehicle models can be achieved by connecting front water channel assemblies 8 and front windshield structures of different front compartments, which achieves universal design.

The connecting manners between various components can be welding, screwing, clamping/snapping, etc. The following is a specific connecting process.

The front anti-collision beam assembly 1 is bolted to the front longitudinal beam assembly 4, forming a force transmission path. A collapse region of the front longitudinal beam collapses/shrinks when a front impact occurs, to achieve energy absorbing. The front column assembly 2 is bolted to the front longitudinal beam assembly 4, and the front column assembly 2 provides a headlight mounting point, a front bumper mounting point, and a front hood lock mounting point. After the cowl panel assembly 3 is welded with the front longitudinal beam assembly 4, the front floor assembly 7 is dropped along a Z direction and the front floor assembly 7 is welded. Finally, the A-pillar inner panel assembly 5 and the A-pillar inner panel assembly 6 are pushed in a Y direction and welded, to reinforce the entire front engine compartment structure.

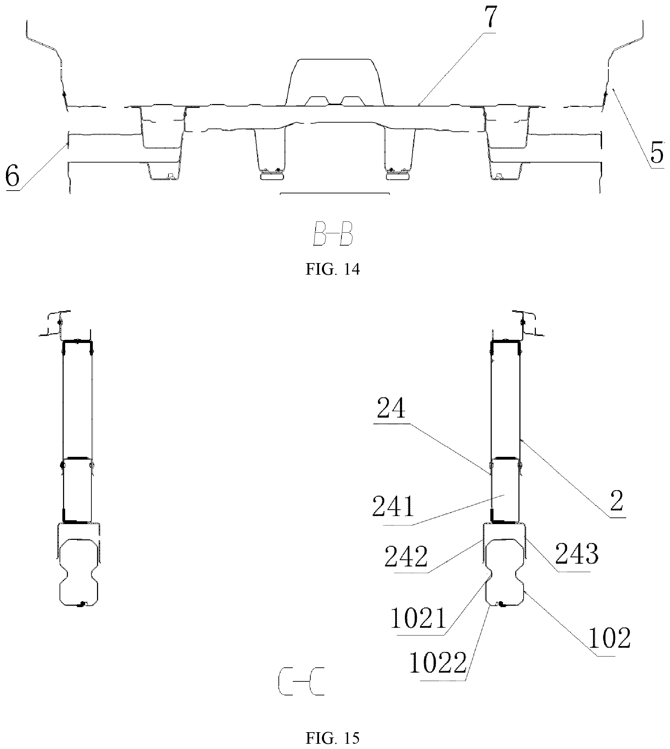

Regarding the first energy-absorbing box 102, as shown in FIG. 15, the cross-section of the first energy-absorbing box 102 is rectangle, and both sides of the rectangle are provided with recesses 1021 that are close to each other. The recesses 1021 on both sides of the first energy-absorbing box 102 have higher rigidity compared to a design of a rectangular cross-section. Therefore, the first energy-absorbing box 102 can be designed as a larger cross-sectional area, which can not only improve the energy-absorbing effect but also ensure the bearing capacity of the first energy-absorbing box 102.

In some embodiments, a recess1021 is located at the middle of a side of the rectangle.

In some embodiments, the four corners of the rectangle are all curved corners 1022, rounded corners or bent corners formed by one or more connection plates connected in sequence.

On the basis of the first energy-absorbing box 102 provided with the above recesses 1021, regarding the front column assembly 2, as shown in FIGs. 11, 12, and 15, there is a connection claw 24 at a bottom of the front column assembly 2. The connection claw 24 includes a connection column 241, a first connection plate 242, and a second connection plate 243. The first connection plate 242 and the second connection plate 243 are respectively connected on both sides of the connection column 241. In an embodiment, an upper end of the first connection plate 242 is connected to an upper end of the second connection plate 243 through a connection plate, and the first connection plate 242 and the second connection plate 243 are connected to the connection column 241 through the connection plate. In another embodiment, the first connection plate 242 and the second connection plate 243 are L-shaped plates, and the first connection plate 242 of the L-shaped plate and the second connection plate 243 of the L-shaped plate are respectively connected to the connection column 241. The first connection plate 242 and the second connection plate 243 are further respectively connected to the first energy-absorbing box 102, and are located above the recesses 1021 to achieve the connection and fixation of the front column assembly 2 with the first energy-absorbing box. In some embodiments, the connection claw 24 is connected to the middle of the first energy-absorbing box 102.

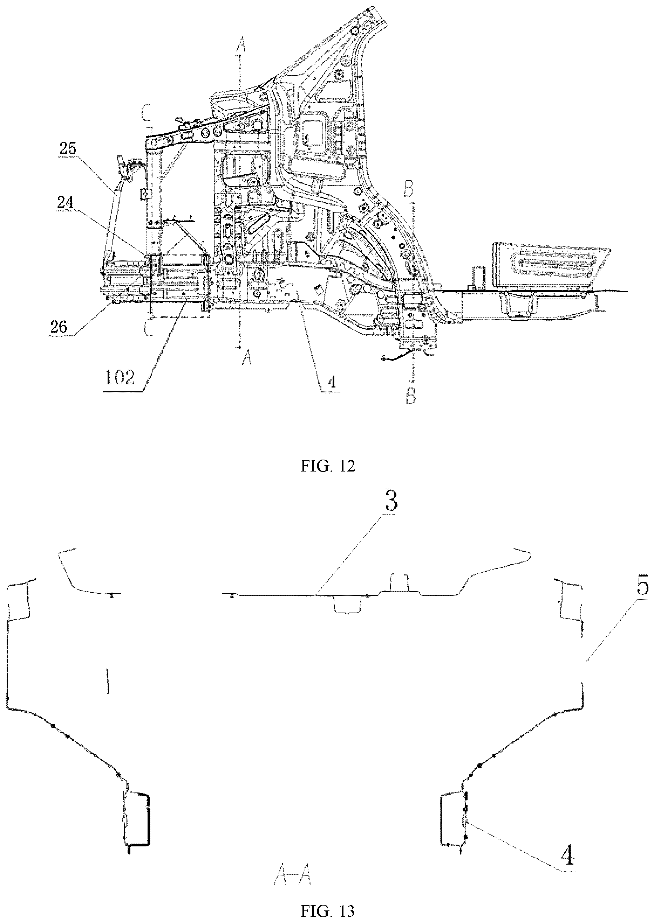

As shown in FIGs. 11 and 12, the front column assembly 2 further includes a first column 21, a second column 22, a column crossbeam 23, an outer connecting rod 25, and an inner connecting rod 26, where two ends of the column crossbeam 23 are respectively connected to the first column 21 and the second column 22, a bottom of each of the first column 21 and the second column 22 is provided with the connection claw 24, one end of the outer connecting rod 25 is connected to a middle of the column crossbeam 23, and the other end is connected to the front anti-collision beam 101, one end of the inner connecting rod 26 is connected to the first column 21, and the other end of the inner connecting rod 26 is connected to the first energy-absorbing box 102 and located at a connection between the first energy-absorbing box 102 and the front longitudinal beam assembly 4; or, one end of the inner connecting rod 26 is connected to the second column 22, and the other end of the inner connecting rod 26 is connected to the second energy-absorbing box 10201 and is located at a connection between the second energy-absorbing box 10201 and the front longitudinal beam assembly 4.

In this embodiment, an outer connecting rod 25 and an inner connecting rod 26 are further provided to the front column assembly 2. The outer connecting rod 25 further provides fixation and support for the front anti-collision beam 101, and the inner connecting rod 26 supports and fixes the connection between the first energy-absorbing box 102 and the front longitudinal beam assembly 4, and cooperates with the connection claw 24 connected at the middle of the first energy-absorbing box 102 to form a triangular fixing structure, further improving the stability and load-bearing capacity of the first energy-absorbing box 102, which has an effect of controlling the deformation of the first energy-absorbing box 102 to prevent the mid part from breaking too quickly. A connection structure between the other inner connecting rod 26, the second energy-absorbing box 10201, and the front longitudinal beam assembly is similar to the previous description, which improves the stability and load-bearing capacity of the second energy-absorbing box 10201 and has the effect of controlling the deformation of the second energy-absorbing box 10201 and preventing the mid part from breaking too quickly.

In this embodiment, there are two outer connecting rods 25. One ends of the two outer connecting rods 25 are connected to the middle of the column crossbeam 23 and the other ends are respectively connected to both ends of the front anti-collision beam 101. A first energy-absorbing box 102 and a second energy-absorbing box 10201 are connected to both sides of the front anti-collision beam 101. There are two inner connecting rods 26. One end of each inner connecting rod is connected to the first column 21 or the second column 22, and the other end is connected to a connection between the first energy-absorbing box 102 and the front longitudinal beam assembly 4 or a connection between the second energy-absorbing box 10201 and the front longitudinal beam assembly 4.

An end face of the first energy-absorbing box 102 close to the front longitudinal beam assembly 4 is provided with an energy-absorbing box connection plate 1023. The end face of the front longitudinal beam assembly 4 close to the first energy-absorbing box 102 is provided with a longitudinal beam connection plate 411. The longitudinal beam connection plate 411 is connected to the energy-absorbing box connection plate 1023 through a threaded connection. The connection between the second energy-absorbing box 10201 and the front longitudinal beam assembly 4 is similar to the connection between the first energy-absorbing box 102 and the front longitudinal beam assembly 4, which is not repeated.

Regarding the front longitudinal beam assembly 4, the front longitudinal beam assembly 4 includes an engine compartment longitudinal beam 41 and a longitudinal beam connection member 42 that are interconnected, where the engine compartment longitudinal beam 41 is connected to the first energy-absorbing box 102, the engine compartment longitudinal beam 41 is a hollow structure, and a cross-sectional area of the first energy-absorbing box 102 is smaller than a cross-sectional area of the engine compartment longitudinal beam 41. In this embodiment, a cross-section of the engine compartment longitudinal beam 41 is trapezoidal. The structure of the second energy-absorbing box 10201 is the same as the structure of the first energy-absorbing box 102, which is not repeated here.

The engine compartment longitudinal beam 41 has a large cross-section, which ensures good strength, stiffness, and load-bearing capacity, and can further maintain stable force transmission in medium-to-low-speed collisions, and can further achieve bending for secondary energy absorbing in high-speed collisions, ensuring the safety of passenger compartment intrusion.

In addition, in response to increasingly strict regulations for collision, the need to change the length of the platform's front suspension, and the increasingly strict space layout of the front compartment, the layout of the water tank is becoming more and more forward, and the length of the vehicle body's anti-collision beam energy-absorbing box is becoming longer, resulting in no overlap between the position of the water tank and the front longitudinal beam in the X direction.

The common installation manner for the water tank is to fix the water tank to the vehicle body through a water tank mounting bracket. The water tank mounting bracket includes an upper crossbeam, a left crossbeam, a lower crossbeam, and a right crossbeam that are connected from end to end. Both the left and right crossbeams are connected with installation plates, and the water tank mounting bracket is fixed to the vehicle body through the installation plates.

When an arrangement position of the water tank is far from the front longitudinal beam, and when the installation plate is connected to the front anti-collision beam plate, due to the excessive length of the cantilever, the stiffness, strength, and modal performance of the mounting point of the water tank mounting bracket will be insufficient, which will affect the structural strength of the entire vehicle and cannot meet the product requirements.

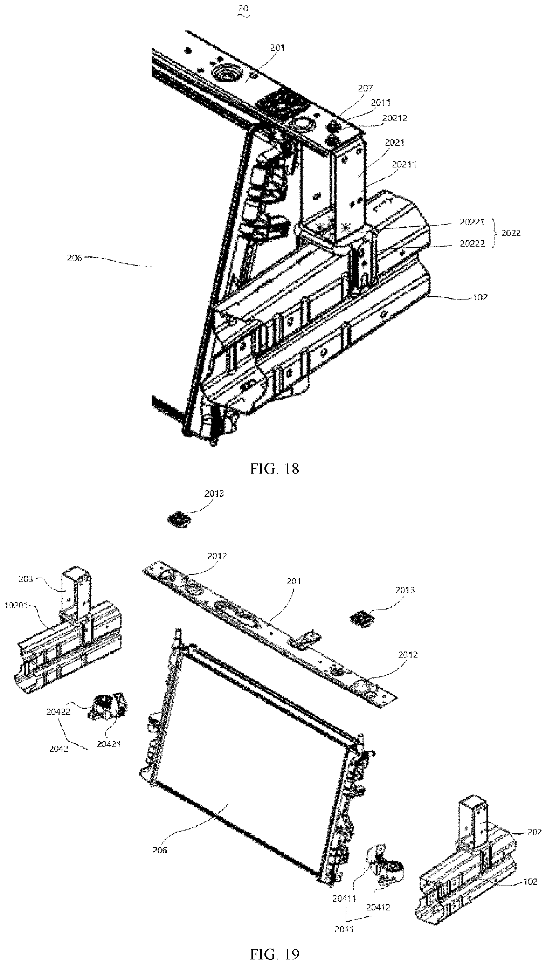

In view of this, the underbody architecture structure provided in the present disclosure further includes a water tank installation structure assembly. Referring to FIGs. 17 and 19, in embodiments of the present disclosure, the water tank installation structure assembly includes a water tank mounting bracket 20 and a water tank 206. The water tank 206 provides cooling and heat dissipation for the engine or other heating device of the vehicle to avoid overheating during operation. In general, the water tank 206 may include a condenser, an intercooler, a radiator, a fan, a water tank, and the like. The water tank 206 is fixed to the vehicle body through the water tank mounting bracket 20. The water tank mounting bracket 20 provides mounting and fixing positions for the water tank 206.

The water tank mounting bracket 20 includes an upper crossbeam 201, a first mounting bracket 202 and a second mounting bracket 203, where the first mounting bracket 202 and the second mounting bracket 203 are symmetrical on the left side and the right side, a first end of the first mounting bracket 202 and a first end of the second mounting bracket 203 are respectively connected to two ends of the upper crossbeam 201, a second end of the first mounting bracket 202 and a second end of the second mounting bracket 203 are respectively connected to the first energy-absorbing box 102 and the second energy-absorbing box 10201.

In an embodiment, referring to FIGs. 17 and 18, the upper crossbeam 201 is configured for fixed connection with the upper mounting point of the water tank 206. One end of a water tank support component 204 is connected to the first energy-absorbing box 102, and the other end of the water tank support component 204 is fixedly connected to the lower mounting point of the water tank 206.

In the technical solution of the present disclosure, an upper crossbeam 201, a first mounting bracket 202, a second mounting bracket 203, and a water tank support component 204 are adopted, where the first mounting bracket 202 is connected to the first energy-absorbing box 102, and the second mounting bracket 203 is connected to the second energy-absorbing box 10201. The connection manner between the first energy-absorbing box 102 and the second energy-absorbing box 10201 and the lower mounting point of the water tank 206 has been changed from an installation of a general cantilever structure to an installation of a support form, thereby solving the problem of insufficient stiffness, strength and mode performance of the mounting point of the water tank 206. Moreover, compared to the mounting and fixing manner by an upper crossbeam and a lower crossbeam, in the technical solution of the present disclosure, the lower crossbeam of the water tank 206 is cancelled and the water tank support component 204 is used to fix the water tank 206, reducing the weight of the overall structure.

A lower part of the water tank 206 is supported by the water tank support component 204. In order to improve the stability of the installation structure, the water tank support component 204 includes a first support member 2041 and a second support member 2042. The first support member 2041 and the second support member 2042 are fixedly connected to the first energy-absorbing box 102 and the second energy-absorbing box 10201 on the two longitudinal beams, respectively. By setting in this way, the bottom two sides of the water tank 206 are fixed, making the water tank 206 less prone to shaking after installation and more stable. Because the scheme of connecting the water tank 206 without the lower crossbeam, the first support member 2041 and the second support member 2042 are configured to support the water tank 206, reducing the overall weight of the water tank mounting bracket 20.

Materials of the first support member 2041 and the second support member 2042 can be metal materials, such as aluminium, steel, etc. In this embodiment, the first support member 2041 and the second support member 2042 are aluminium. The first support member 2041 and the second support member 2042 are configured to provide support for the lower part of the water tank 206. As long as the first support member 2041 and the second support member 2042 can play a supporting role, the structures of the first support member 2041 and the second support member 2042 are not limited in the present disclosure, such as an "L" type structure.

As shown in FIG. 18, in order to facilitate assembly and reduce mold opening costs. The first mounting bracket 202 includes a first connecting member 2021 and a first fixing member 2022, and the second mounting bracket 203 includes a second connecting member and a second fixing member. The first connecting member 2021 and the second connecting member are connected to the upper crossbeam 201, the first fixing member 2022 is connected to the first energy-absorbing box 102, and the second fixing member is connected to the second energy-absorbing box 10201.

The first connecting member 2021 and the first fixing member 2022 are fixed by welding, the first connecting member 2021 is connected to the upper crossbeam 201 by a bolt 207, and the first connecting member 2021 and the upper crossbeam 201 can also be connected by rivets or other means, which is not limited.

For example, in order to ensure the reliability and stability of the connection with the first energy-absorbing box 102. The first fixing member 2022 includes a first receiving section 20221 and first limiting sections 20222 oppositely located at two ends of the first receiving section 20221, where the first receiving section 20221 is fixedly connected to the first connecting member 2021, and the first limiting sections 20222 are fixedly connected to the first energy-absorbing box 102; and the second fixing member includes a second receiving section and second limiting sections oppositely located at two ends of the second receiving section, where the second receiving section is fixedly connected to the second connecting member, and the second limiting sections are fixedly connected to the second energy-absorbing box 10201.

In this embodiment, the first connecting member 2021 and the second connecting member are sheet metal parts. As shown in FIG. 18, the first connecting member 2021 includes two first connecting sections 20211 opposite to each other, where the two first connecting sections 20211 enclose to form a hollow frame. In an embodiment, two first connecting segments 20211 are U-shaped structures, and the first contact segments 20211 of the two U-shaped structures enclose to form a hollow frame. The second connecting member includes two second connecting sections opposite to each other, where the two second connecting sections enclose to form a hollow frame, which can further reduce the weight of the water tank mounting bracket 20. The first connecting member 2021 is roughly rectangular, but can also be of other shapes, which is not limited. The first connecting member 2021 is connected to the first fixing member 2022, and the first fixing member 2022 includes a fork formed by the first receiving section 20221 and the first limiting section 20222, and is clamped to the first energy-absorbing box 102 through the fork, and then fixed by welding. The first fixing member 2022 and the second fixing member are welded with the first energy-absorbing box 102 and the second energy-absorbing box 10201. Due to the long length of the first energy-absorbing box 102 and the second energy-absorbing box 10201, the functional requirements of the first energy-absorbing box 102 and the second energy-absorbing box 10201 can be met. CAE (Computer Aided Engineering analysis shows that the front-collision results meet the requirements.

In order to ensure the reliability and stability of the connection with the first energy-absorbing box 102, in an embodiment, the first receiving section 20221 and the first limiting sections 20222 are an integrated structure, and the second receiving section and the second limiting sections are an integrated structure. The first receiving section 20221 and the first limiting section 20222 can be made by using methods such as stamping, and the integrated structure ensures the reliability of the connection with the first energy-absorbing box 102.

To facilitate the installation of the first mounting bracket 202 and the second mounting bracket 203 with the upper crossbeam 201. The first connecting member 2021 is provided with a first installation part 20212, the upper crossbeam 201 is provided with a first connection part 2011 corresponding to the first installation part 20212, and the first installation part 20212 is connected to the first connection part 2011.

The second connecting member is provided with a second installation part, the upper crossbeam 201 is provided with a second connection part corresponding to the second installation part, and the second installation part is connected to the second connection part.

For example, for convenient and fast installation, and in order to reduce the assembly process, the first installation part 20212 and the second installation part are weld nuts, the first connection part 2011 and the second connection part are connection holes, the first connecting member 2021 is fixedly connected to the upper crossbeam 201 through a bolt 207, and the second connecting member is fixedly connected to the upper crossbeam 201 through a bolt.

In addition, in order to increase the contact area, reduce pressure, prevent loosening, and protect parts and screws, each of the first connecting member 2021 and the second connecting member is further provided with a backing plate, where when the first connecting member 2021 is fixed with the upper crossbeam 201, the backing plate provided on the first connecting member 2021 is located between the first connecting member 2021 and the upper crossbeam 201, and when the second connecting member is fixed with the upper crossbeam 201, the backing plate provided on the second connecting member is located between the second connecting member and the upper crossbeam 201.

In the process of installing the water tank 206 on the water tank mounting bracket 20, the first mounting bracket 202 and the second mounting bracket 203 are respectively welded and fixed with the first energy-absorbing box 102 and the second energy-absorbing box 10201; through the fork formed by the first receiving section 20221 and the first limiting sections 20222, the first fixing member 2022 is clamped/snapped to the first energy-absorbing box 102, and then carbon dioxide arc welding is used to fix the two first limiting sections 20222; through the fork formed by the second receiving section and the second limiting sections, the second fixing member is clamped/snapped to the second energy-absorbing box 10201, and carbon dioxide arc welding is used to fix the two second limiting sections; the upper crossbeam 201 is fixedly connected to the first mounting bracket 202 and the second mounting bracket 203 through bolts 207; the first support member 2041 and second support member 2042 in the water tank support component 204 are respectively connected to the first energy-absorbing box 102 and the second energy-absorbing box 10201; and the lower mounting points on both sides of the water tank 206 are connected to the first support member 2041 and the second support member 2042. In this way, through the upper beam 201, the first mounting bracket 202, the second mounting bracket 203 and the water tank support assembly 204, the water tank 206 is fixed with the upper crossbeam 201, and the water tank 206 is fixed with the water tank support assembly 204, where the first mounting bracket 202, the second mounting bracket 203 supports the upper crossbeam 201, thereby fixing the water tank 206 on the water tank mounting bracket 20.

In an embodiment, an upper part of the water tank 206 is connected to the upper crossbeam 201 through a buffer member 2013, and two sides of the water tank 206 are respectively connected to the first energy-absorbing box 102 and the second energy-absorbing box 10201 through a first support member 2041 and a second support member 2042.

In an embodiment, the water tank 206 is a rectangular structure, installed and fixed in the water tank mounting bracket 20 including the upper crossbeam 201, the first mounting bracket 202, the second mounting bracket 203, the first energy-absorbing box 102 and the second energy-absorbing box 10201. Two ends of the upper crossbeam 201 along a length direction of the upper crossbeam 201 are respectively connected to the first mounting bracket 202 and the second mounting bracket 203. The first mounting bracket 202 and the second mounting bracket 203 are respectively connected to the first energy-absorbing box 102 and the second energy-absorbing box 10201, forming a stable water tank mounting bracket 20 structure to provide fixing and support for the water tank 206. The water tank mounting bracket 20 is fixedly connected to the vehicle body through the first energy-absorbing box 102 and the second energy-absorbing box 10201, to fix the water tank mounting bracket 20 to the vehicle body, thereby fixing the water tank 206 fixed on the water tank mounting bracket 20 to the vehicle body, achieving a fixed connection between the water tank 206 and the vehicle body. The upper part of water tank 206 is connected to the upper crossbeam 201, and the two sides of water tank 206 are respectively connected to the first energy-absorbing box 102 and the second energy-absorbing box 10201. In this way, a fixed connection is achieved between the water tank 206 and the water tank mounting bracket 20, forming a stable connection between the water tank 206 and the water tank mounting bracket 20. In this way, through the fixed connection between the water tank 206 and the water tank mounting bracket 20, and the fixed connection between the water tank mounting bracket 20 and the vehicle body, the fixed connection between the water tank 206 and the vehicle body is achieved.

In a technical solution of the present disclosure, through an upper crossbeam 201, a first mounting bracket 202 and a second mounting bracket 203, first ends of the first mounting bracket 202 and the second mounting bracket 203 are respectively connected to the ends of both sides of the upper crossbeam 201, and second ends of the first mounting bracket 202 and the second mounting bracket 203 are respectively connected to the front longitudinal beam assembly or two energy-absorbing boxes of the vehicle, thereby achieving a stable water tank mounting bracket 20 structure, achieving the fixed connection between the water tank mounting bracket 20 and the vehicle body. The upper part of the water tank 206 is connected to the upper crossbeam 201 through a buffer member 2013, and two sides of the water tank 206 are respectively connected to the first energy-absorbing box 102 and the second energy-absorbing box 10201 through a first support member 2041 and a second support member 2042, thereby achieving a stable connection between the water tank 206 and the water tank mounting bracket 20. Compared to the way in which the lower mounting points of the water tank mounting bracket are fixedly connected to the vehicle body through the installation plates, in the present disclosure, the first mounting bracket 202 and the second mounting bracket 203 are directly fixedly connected to the vehicle body, the mounting points of the water tank mounting bracket 20 is changed from a cantilever structure to a support structure, thereby avoiding excessive cantilever length and improving the stiffness, strength, and modal performance of the mounting points of the water tank mounting bracket 20, improving the structural strength of the entire vehicle. In addition, the present disclosure cancels the lower crossbeam of the water tank mounting bracket, and changes the lower mounting points of the water tank 206 from bottom to sides of the water tank 206. On the one hand, the installation structure is left-right symmetrical, which is conducive to the stability of installation and fixation. On the other hand, cancelling the lower crossbeam reduces the weight of the water tank mounting bracket 20, which is beneficial for reducing the weight of the vehicle body. Compared to the connecting manner in which the upper and lower parts of the water tank 206 are respectively connected to the upper and lower crossbeams of the water tank mounting bracket through clamp fixation, the present disclosure uses a buffer member 2013 to connect the upper part of the water tank 206 to the upper crossbeam 201, thereby achieving the connection between the water tank 206 and the water tank mounting bracket 20 in a height direction of the vehicle body, avoiding that, during the assembly process of the water tank 206 and the water tank mounting bracket 20, the upper part of water tank 206 and the upper crossbeam of the mounting bracket, as well as the lower part of water tank 206 and the lower crossbeam of the mounting bracket, are not properly assembled due to assembly errors, therefore, avoiding the detachment of the water tank 206 caused by the inadequate assembly between the water tank 206 and the mounting bracket, and also avoiding the functional failure of the water tank 206, and at the same time, reducing the assembly accuracy requirements between the water tank 206 and the water tank mounting bracket 20, and improving the assembly efficiency between the water tank 206 and the water tank mounting bracket 20.

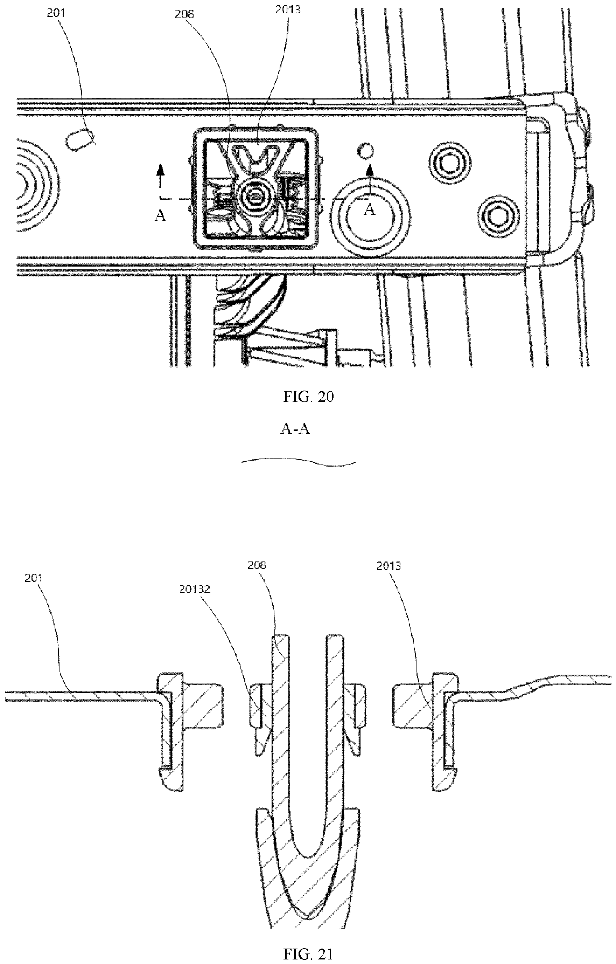

Referring to FIGs. 19-21, furthermore, the upper part of the water tank 206 is provided with a connecting pin 208, and the upper crossbeam 201 is provided with a connecting port 2012. The connecting pin 208 is fixed to the connecting port 2012 through a buffer member 2013 to fix the water tank 206 with the upper crossbeam 201. For example, the upper crossbeam 201 is provided with a connecting port 2012, and the upper part of the water tank 206 is provided with a connecting pin 208. The connecting port 2012 is configured to be clamped to the buffer member 2013 and the connecting pin 208. In an embodiment, the buffer member 2013 is clamped in the connecting port 2012, and the connecting pin 208 is fixed to the buffer member 2013, thereby achieving a fixed connection between the water tank 206 and the upper crossbeam 201. During the running of the vehicle or under stress, the buffer member 2013 avoids the abnormal noise caused by the direct contact connection between the water tank 206 and the upper beam 201 and the relative movement between the water tank 206 and the upper beam 201, and further avoids wear of the connecting pin 208 and the connecting port 2012 caused by the relative movement between the connecting pin 208 and the connecting port 2012. On the other hand, compared to the technical solution in which the upper part of the water tank 206 is connected to the upper crossbeam of the mounting bracket, and the lower part of the water tank 206 is connected to the lower crossbeam of the mounting bracket, in the present disclosure, the connecting pin 208 of the upper part of the water tank 206 is connected to the connecting port 2012 of the upper crossbeam 201 through the buffer member 2013, thereby achieving the fixation of the water tank 206 and the water tank mounting bracket 20 in the vehicle height direction. The setting of the buffer member 2013 provides a larger assembly error range for the connection between the water tank 206 and the water tank mounting bracket 20, reduces the accuracy requirements for assembly between the water tank 206 and the water tank mounting bracket 20, improves the assembly efficiency between the water tank 206 and the water tank mounting bracket 20, and improves the assembly yield rate between the water tank 206 and the water tank mounting bracket 20.

In the technical solution of the present disclosure shown in FIGs. 19-21, the upper crossbeam 201 is provided with two connecting ports 2012 along a length direction of the upper crossbeam 201 close to both ends, and the connecting ports 2012 are square. Correspondingly, the buffer members 2013 are also square to match the connecting ports 2012. There are also two connecting pins 208 on the upper part of the water tank 206 to correspond to the connecting ports 2012. In some embodiments, there can be one or more connecting ports 2012 and one or more connecting pins 208. There are no restrictions on the number of the connecting ports 2012, the connecting pins 208, and the buffer parts 2013, as well as the positions of the connecting ports 2012 and the connecting pins 208. As long as the connecting ports 2012, the connecting pins 208, and the buffer parts 2013 correspond one by one. The shapes of the connecting port 2012 and the buffer member 2013 can also be circular, polygonal, and other shapes. There is no restrictions on the shape of the connecting port 2012 and the buffer member 2013, as long as the connecting port 2012 and the buffer member 2013 match.

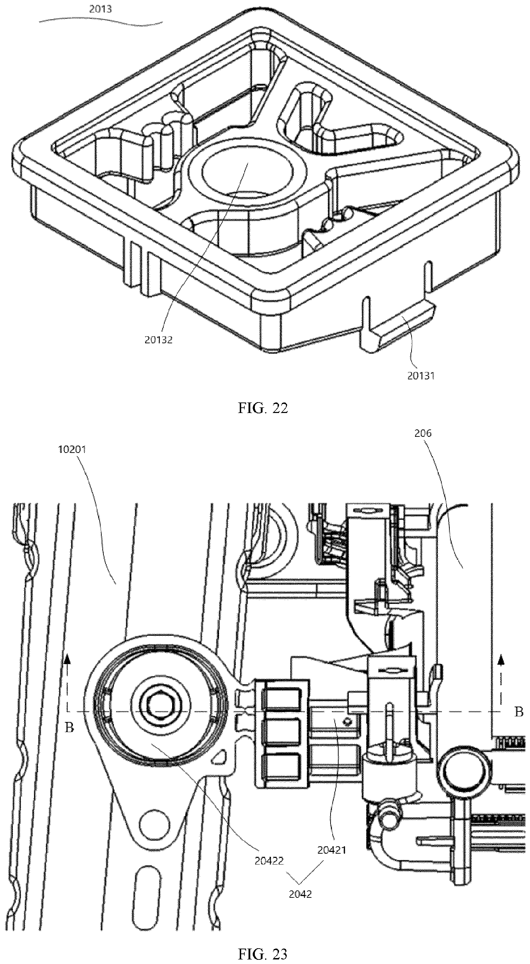

Referring to FIG. 22, furthermore, the buffer member 2013 is provided with a clamping fixing part 20131, and the buffer member 2013 is clamped and fixed with the connecting port 2012 through the clamping fixing part 20131. For example, the buffer member 2013 is provided with a clamping fixing part 20131 along the circumference of the buffer member 2013, and the buffer member 2013 is clamped and fixed with the connecting port 2012 through the clamping fixing part 20131. In the scheme of the present disclosure shown in the figures, the clamping fixing part 20131 is a clamping protrusion arranged in the circumferential direction of the buffer member 2013. When the buffer member 2013 is fixedly connected to the connecting port 2012, the clamping protrusion is fixed on the inner wall of the connecting port 2012, thereby achieving a fixed connection between the buffer member 2013 and the connecting port 2012, ensuring a stable connection between the buffer member 2013 and the connecting port 2012, preventing the buffer member 2013 from falling off from the connecting port 2012, and thus avoiding the failure of the connection between the water tank 206 and the water tank mounting bracket 20. In an embodiment, there are two clamping fixing parts 20131 symmetrically arranged along the circumference of the buffer member 2013, and in other embodiments, there can also be multiple clamping fixing parts 20131. Of course, the clamping fixing part 20131 can also be clamping convex points set at intervals along the circumference of the buffer member 2013, and clamping groove is set on the inner wall of the connecting port 2012. When connecting the buffer member 2013 with the connecting port 2012, the fixed connection between the buffer member 2013 and the upper crossbeam 201 is achieved through the coordination between the clamping convex points and the clamping groove. Here, there are no restrictions on the structure and quantity of the clamping fixing part 20131.

Referring to FIG. 22, furthermore, the buffer member 2013 is provided with a clamping part 20132, and the connecting pin 208 is connected to the buffer member 2013 through the clamping part 20132. For example, in the technical solution shown in FIG. 22 of the present disclosure, the clamping part 20132 is a circular hole arranged in the middle of the buffer member 2013. When the water tank 206 is connected to the buffer member 2013, the connecting pin 208 of the water tank 206 penetrates the circular hole of the buffer member 2013 and contacts with the inner wall of the circular hole, thereby achieving a fixed connection between the connecting pin 208 and the clamping part 20132, and forming a stable connection between the connecting pin 208 and the clamping part 20132, which prevents the connection between the connecting pin 208 and the clamping part 20132 from falling off, thereby avoiding the failure of the connection between the water tank 206 and the buffer member 2013. In an embodiment, the cross-section of the connecting pin 208 is in a "V" shape. When the connecting pin 208 is connected to the buffer member 2013, both side walls of the connecting pin 208 are in contact with the clamping part 20132 of the buffer member 2013, thereby achieving the connection and fixation between the connecting pin 208 and the buffer member 2013. In an embodiment, the cross-section of the connecting pin 208 can also be rectangular. When the connecting pin 208 is connected with the buffer member 2013, the outer circumference of the connecting pin 208 is in contact with the clamping part 20132 of the buffer member 2013, thereby achieving the connection and fixation between the connecting pin 208 and the buffer member 2013. Here, there is no restriction on the shape of the connecting pin 208 and the clamping part 20132, as long as the connecting pin 208 and the clamping part 20132 can match.

Furthermore, the material of the clamping part 20132 is a cushioning material. In order to improve the stability of the connection between the connecting pin 208 and the clamping part 20132 of the buffer member 2013, the clamping part 20132 uses a cushioning material such as silicone, rubber, etc. to ensure an interference fit between the clamping part 20132 and the connecting pin 208. When the connecting pin 208 is connected to the clamping part 20132, the elastic deformation of the clamping part 20132 is utilized to make the connection between the connecting pin 208 and the clamping part 20132 tighter, thereby improving the stability and reliability of the connection between the connecting pin 208 and the buffer part 2013.

Referring to FIGs. 18-19, furthermore, the first mounting bracket 202 includes a first connecting member 2021 (the first connecting member 2021 can be a first side vertical beam) and a first fixing member 2022 connected to the first connecting member 2021. The second mounting bracket 203 includes a second connecting member (the second connecting member can be a second side vertical beam) and a second fixing member connected to the second connecting member. First ends of the first connecting member 2021 and the second connecting member are respectively connected to both ends of the upper crossbeam 201, and second ends of the first connecting member 2021 and the second connecting member are respectively connected to the first energy-absorbing box 102 and the second energy-absorbing box 10201. Two sides of the water tank 206 are respectively connected to the first energy-absorbing box 102 and the second energy-absorbing box 10201 through the first support member 2041 and the second support member 2042. In an embodiment, the first energy-absorbing box 102 and the second energy-absorbing box 10201 are respectively fixed to the two front longitudinal beams of the vehicle. Along the height direction of the vehicle, there is a connecting hole at an end of the first connecting member 2021 facing the roof, and at the same time, there is a connecting hole at an end of the upper crossbeam 201 along its length. The connecting hole of the first connecting member 2021 is connected to the connecting hole of the upper crossbeam 201 through fasteners to connect and fix the first connecting member 2021 and the upper crossbeam 201. In an embodiment, the first connecting member 2021 and the upper crossbeam 201 can also be connected by welding. Along the height direction of the vehicle, the first connecting member 2021 is provided with a connecting foot towards the chassis of the vehicle, and the first connecting member 2021 is connected to the first energy-absorbing box 102 through the connecting foot. The first energy-absorbing box 102 can be connected to the connecting foot through bolts, welding, or other methods. The second connecting member and the second energy-absorbing box 10201 are symmetrically arranged with the first connecting member 2021 and the first energy-absorbing box 102. The connection manner of the second connecting member and the second energy-absorbing box 10201 is similar to the connection manner of the first connecting member 2021 and the first energy-absorbing box 102, which is not repeated here. Compared with the left vertical beam and the right vertical beam in the water tank mounting frame, in the present disclosure, the first connecting member 2021 and the second connecting member cancel the lower half of the water tank side vertical beam, allowing the first connecting member 2021 and the second connecting member to be respectively directly welded to the first energy-absorbing box 102 and the second energy-absorbing box 10201, thereby eliminating the water tank mounting bracket installation plate used to connect the connecting member and the vehicle body. In the present disclosure, the installation plate of the water tank mounting bracket and the lower half of the water tank side vertical beam are cancelled, thereby reducing the weight of the water tank mounting bracket 20 and reducing the overall weight of the vehicle body. At the same time, the mounting points between the water tank 206 and the connecting member has been changed from a cantilever structure to a welded connection, thereby improving the stiffness, strength, and modal performance of the mounting points of the water tank mounting bracket, to make it meet product requirements.

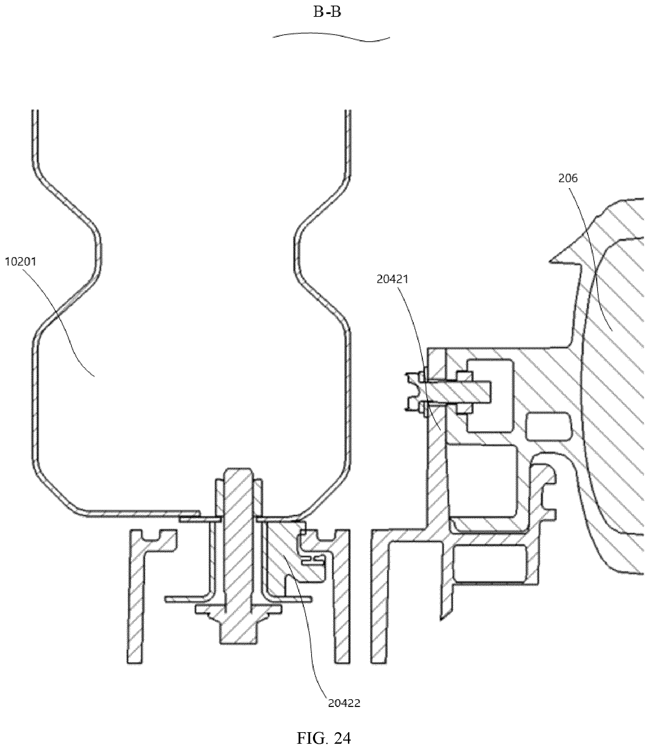

Referring to FIGs. 19, 23, and 24, furthermore, the first support member 2041 includes a first water tank connection part 20411 and a first support part 20412 that are interconnected, and the second support member 2042 includes a second water tank connection part 20421 and a second support part 20422 that are interconnected, where the first water tank connection part 20411 and the second water tank connection part 20421 are respectively connected to two sides of the water tank 206 through fasteners, and the first support part 20412 and the second support part 20422 are respectively connected to the first energy-absorbing box 102 and the second energy-absorbing box 10201 through fasteners. In an embodiment, the first support 2041 is configured for connecting one side of the water tank 206 to the first energy-absorbing box 102, and the second support 2042 is configured for connecting the other side of the water tank 206 to the second energy-absorbing box 10201. The first support member 2041 includes a first water tank connection part 20411 and a first support part 20412. The first water tank connection part 20411 is connected to one side of the water tank 206, and the first support part 20412 is connected to the first energy-absorbing box 102. In the technical solution shown in FIGs. 23 and 24 of the present disclosure, the second support member 2042 is in an "L" shaped structure, that is, the structure composed of the second water tank connection part 20421 and the second support part 20422 is in an L shape. For example, a connection block is provided on a side of the water tank 206, and the second water tank connection part 20421 is clamped with the connection block and fixed by bolts. The second energy-absorbing box 10201 is provided with a connection hole on a side facing the vehicle bottom, and the second support part 20422 is fixedly connected to the connection hole through bolts. In the technical solution shown in FIGs. 23 and 24 of the present disclosure, the second water tank connection part 20421 is provided with a clamping groove corresponding to the connection block, and the second water tank connection part 20421 is clamped to the connection block through the clamping groove. At the same time, both the second water tank connection part 20421 and the water tank 206 are provided with connecting holes. The second water tank connection part 20421 and the water tank 206 are connected by bolts corresponding to the connecting holes to achieve fixed connection. The second support part 20422 has a circular structure, and has a circular chassis against the second energy-absorbing box 10201. A connecting hole is opened in the middle of the circular structure, so that the second support part 20422 is fixed with the second energy-absorbing box 10201 through a bolt connection between the support part and the connecting hole, achieving fixed installation of the side of the water tank 206 and ensuring stable connection between the water tank 206 and the energy-absorbing box. Thus, the second support 2042 is shaped in an "L" shape. In an embodiment, the second support 20422 can also be connected to one side of the second energy-absorbing box 10201 along a width direction of the vehicle, thus making the second support 2042 shaped in an "I" shape. In an embodiment, the second water tank connection part 20421 and the second support part 20422 can also be connected to the water tank 206 and the second energy-absorbing box 10201 respectively through fasteners. The structures of the second water tank connection part 20421 and the second support part 20422 are not limited here, as long as they can be connected to the water tank 206 and the second energy-absorbing box 10201. The first water tank connection part 20411 is symmetrically arranged with the second water tank connection part 20421. The structure and connection manner of the first water tank connection part 20411 are similar to the second water tank connection part 20421, which is not repeated here.

Furthermore, materials of the first support member 2041 and the second support member 2042 are aluminium. In this way, the aluminium materials can ensure the structural strength of the first support member 2041 and the second support member 2042, and ensure the structural strength of the connection between the water tank 206 and the energy-absorbing box. At the same time, the lightweight aluminium materials also reduce the overall weight of the water tank installation structure assembly, thereby reducing the weight of the vehicle body. In an embodiment, the first support member 2041 and the second support member 2042 can also include other metals or plastics, as long as they can ensure the structural strength of the first support member 2041 and the second support member 2042.

In an embodiment, the water tank 206 is inclined towards a rear of a vehicle. For example, the upper end of the water tank 206 is set to tilt backwards, or the lower end of the water tank 206 is set to tilt backwards. In this way, the water tank 206 is set away from the front end of the vehicle, increasing the distance between the water tank 206 and the front anti-collision beam of the vehicle in the X-direction (the X-direction refers to the length direction of the vehicle), thereby improving the low-speed collision performance of the vehicle, avoiding damage caused by the water tank 206 during vehicle collisions, and improving the protection of the water tank 206.

The present disclosure further provides a vehicle, which includes any one of the aforementioned underbody architecture structures. As the vehicle adopts all the technical solutions of the above embodiments, it has at least all the beneficial effects brought by the technical solutions of the above embodiments, which is not repeated here.

The above provides a detailed description of some embodiments of the present disclosure. It should be understood that those skilled in the art can make many modifications and changes based on the concept of the present disclosure without creative effort. Therefore, all technical solutions that can be obtained by those skilled in the art through logical analysis, reasoning or limited experiments based on the concept of the present disclosure on the basis of the prior art shall be within the scope of protection determined by the claims.

## Claims

1. An underbody architecture structure, comprising a front engine compartment architecture, wherein the front engine compartment architecture comprises a front anti-collision beam assembly (1), a front column assembly (2), a front longitudinal beam assembly (4), and a front floor assembly (7), wherein the front anti-collision beam assembly (1) comprises a front anti-collision beam (101), a first energy-absorbing box (102), and a second energy-absorbing box (10201), wherein the front anti-collision beam (101) is connected to the front longitudinal beam assembly (4) through the first energy-absorbing box (102) and the second energy-absorbing box (10201), and a bottom of the front column assembly (2) is connected to the first energy-absorbing box (102) and the second energy-absorbing box (10201).

2. The underbody architecture structure according to claim 1, further comprising a mid and rear floor architecture, wherein the mid and rear floor architecture comprises a mid floor (16), a rear floor (17), a seat pit (18), a mid floor frame structure, and a battery pack (15), wherein the mid floor frame structure comprises a crossbeam component and a longitudinal beam component, the battery pack (15) is installed below the crossbeam component, the mid floor (16) is installed above the crossbeam component, the mid floor (16), the rear floor (17), and the seat pit (18) are sequentially connected, the crossbeam component, the battery pack (15), the mid floor (16), the rear floor (17) and the seat pit (18) are supported by the longitudinal beam component, and the mid floor is connected to the front floor assembly (7).

3. The underbody architecture structure according to claim 2, wherein the longitudinal beam component comprises a first sill beam (9) and a second sill beam (10), the crossbeam component comprises a first mid floor crossbeam (11), a second mid floor crossbeam (12) and a third mid floor crossbeam (13), wherein two ends of each of the first mid floor crossbeam (11), the second mid floor crossbeam (12) and the third mid floor crossbeam (13) are respectively connected to the first sill beam (9) and the second sill beam (10) through mid floor crossbeam connection brackets (14).

4. The underbody architecture structure according to claim 3, wherein each of the first sill beam (9) and the second sill beam (10) is provided with longitudinal beam battery pack fixing points (151), and each of the first mid floor crossbeam (11), the second mid floor crossbeam (12) and the third mid floor crossbeam (13) is provided with crossbeam battery pack fixing points (152), and the battery pack (15) is fixed to the longitudinal beam battery pack fixing points (151) and the crossbeam battery pack fixing points (152).

5. The underbody architecture structure according to claim 3, wherein each of the first sill beam (9) and the second sill beam (10) is provided with longitudinal beam battery pack fixing points (151), and the battery pack (15) is fixed to the longitudinal beam battery pack fixing points (151).

6. The underbody architecture structure according to claim 3, wherein each of the first sill beam (9) and the second sill beam (10) comprises a multi-cavity structure, and each of the first sill beam (9) and the second sill beam (10) comprises an crossbeam support part (91) and a battery support part (92) that are interconnected, wherein the crossbeam support part (91) is located above the battery support part (92), a cross-section of the crossbeam support part (91) is a hollow quadrilateral, a cross-section of the battery support part (92) is a multi-hole grid, a side of the crossbeam support part (91) is connected to the mid floor crossbeam connection bracket (14), and a side of the battery support part (92) is connected to the battery pack (15).

7. The underbody architecture structure according to claim 6, wherein the battery support part (92) comprises a first layer support part (921), a second layer support part (922) and a bottom connection part (923) that are sequentially connected, wherein a cross-section of each of the first layer support part (921), the second layer support part (922) and the bottom connection part (923) comprises one or more polygons.

8. The underbody architecture structure according to claim 3, wherein the mid floor crossbeam connection bracket (14) comprises a first horn-shaped connection plate (141), a second horn-shaped connection plate (142) and a bottom fixing plate (143), wherein the bottom fixing plate (143) is fixedly connected to a bottom of the first horn-shaped connection plate (141) and a bottom of the second horn-shaped connection plate (142) to form a U-shaped structure, a top of the first horn-shaped connection plate (141) and a top of the second horn-shaped connection plate (142) are connected with the first mid floor crossbeam (11), the second mid floor crossbeam (12) or the third mid floor crossbeam (13), and a side of the first horn-shaped connection plate (141) and a side of the second horn-shaped connection plate (142) are connected with the first sill beam (9) or the second sill beam (10).

9. The underbody architecture structure according to any one of claims 1 to 8, wherein a cross-section of the first energy-absorbing box (102) is rectangle, and middles of two sides of the rectangle are provided with recesses (1021) that are close to each other.

10. The underbody architecture structure according to claim 9, wherein four corners of the rectangle are curved corners (1022).

11. The underbody architecture structure according to claim 9, wherein a bottom of the front column assembly (2) is provided with a connection claw (24), wherein the connection claw (24) comprises a connection column (241), a first connection plate (242) and a second connection plate (243), wherein the first connection plate (242) and the second connection plate (243) are respectively connected on two sides of the connection column (241), and the first connection plate (242) and the second connection plate (243) are further connected to the first energy-absorbing box (102) and are located above the recesses (1021).

12. The underbody architecture structure according to claim 11, wherein the connection claw (24) is connected to a middle of the first energy-absorbing box (102).

13. The underbody architecture structure according to claim 11, wherein the front column assembly (2) further comprises a first column (21), a second column (22), a column crossbeam (23), an outer connecting rod (25), and an inner connecting rod (26), wherein two ends of the column crossbeam (23) are respectively connected to the first column (21) and the second column (22), a bottom of each of the first column (21) and the second column (22) is provided with the connection claw (24), one end of the outer connecting rod (25) is connected to a middle of the column crossbeam (23), and the other end of the outer connecting rod (25) is connected to the front anti-collision beam (101), one end of the inner connecting rod (26) is connected to the first column (21), and the other end of the inner connecting rod (26) is connected to the first energy-absorbing box (102) and located at a connection between the first energy-absorbing box (102) and the front longitudinal beam assembly (4); or, one end of the inner connecting rod (26) is connected to the second column (22), and the other end of the inner connecting rod (26) is connected to the second energy-absorbing box (10201) and is located at a connection between the second energy-absorbing box (10201) and the front longitudinal beam assembly (4).

14. The underbody architecture structure according to claim 1, wherein an end face of the first energy-absorbing box (102) close to the front longitudinal beam assembly (4) is provided with an energy-absorbing box connection plate (1023), and an end face of the front longitudinal beam assembly (4) close to the first energy-absorbing box (102) is provided with a longitudinal beam connection plate (411), wherein the longitudinal beam connection plate (411) is connected to the energy-absorbing box connection plate (1023) through a thread connection.

15. The underbody architecture structure according to any one of claims 1 to 14, wherein the front longitudinal beam assembly (4) comprises an engine compartment longitudinal beam (41) and a longitudinal beam connection member (42) that are interconnected, wherein the engine compartment longitudinal beam (41) is connected to the first energy-absorbing box (102), the engine compartment longitudinal beam (41) is a hollow structure, and a cross-sectional area of the first energy-absorbing box (102) is smaller than a cross-sectional area of the engine compartment longitudinal beam (41).

16. The underbody architecture structure according to claim 15, wherein a cross-section of the engine compartment longitudinal beam (41) is trapezoidal.

17. The underbody architecture structure according to any one of claims 1 to 16, wherein the front engine compartment architecture further comprises a cowl panel assembly (3) and an A-pillar inner panel assembly (5), wherein a side of the front longitudinal beam assembly (4) is connected to the A-pillar inner panel assembly (5), the cowl panel assembly (3) is connected to the front longitudinal beam assembly (4), and the front floor assembly (7) is installed on the front longitudinal beam assembly (4).

18. The underbody architecture structure according to any one of claims 1 to 17, further comprising a water tank mounting bracket, wherein the water tank mounting bracket comprises an upper crossbeam (201), a first mounting bracket (202) and a second mounting bracket (203), wherein a first end of the first mounting bracket (202) and a first end of the second mounting bracket (203) are respectively connected to two ends of the upper crossbeam (201), a second end of the first mounting bracket (202) and a second end of the second mounting bracket (203) are respectively connected to the first energy-absorbing box (102) and the second energy-absorbing box (10201).

19. The underbody architecture structure according to claim 18, wherein the first mounting bracket (202) comprises a first connecting member (2021) and a first fixing member (2022) that are interconnected, wherein the first connecting member (2021) is connected to the upper crossbeam (201), and the first fixing member (2022) is connected to the first energy-absorbing box (102); and
the second mounting bracket (203) comprises a second connecting member and a second fixing member that are interconnected, wherein the second connecting member is connected to the upper crossbeam (201), and the second fixing member is connected to the second energy-absorbing box (10201).

20. The underbody architecture structure according to claim 19, wherein the first fixing member (2022) comprises a first receiving section (20221) and first limiting sections (20222) oppositely located at two ends of the first receiving section (20221), wherein the first receiving section (20221) is fixedly connected to the first connecting member (2021), and the first limiting sections (20222) are fixedly connected to the first energy-absorbing box (102); and
the second fixing member comprises a second receiving section and second limiting sections oppositely located at two ends of the second receiving section, wherein the second receiving section is fixedly connected to the second connecting member, and the second limiting sections are fixedly connected to the second energy-absorbing box (10201).

21. The underbody architecture structure according to claim 20, wherein the first receiving section (20221) and the first limiting sections (20222) are an integrated structure, and the second receiving section and the second limiting sections are an integrated structure.

22. The underbody architecture structure according to claim 19, wherein the first connecting member (2021) is provided with a first installation part (20212), the upper crossbeam (201) is provided with a first connection part (2011) corresponding to the first installation part (20212), and the first installation part (20212) is connected to the first connection part (2011); and
the second connecting member is provided with a second installation part, the upper crossbeam is provided with a second connection part corresponding to the second installation part, and the second installation part is connected to the second connection part.

23. The underbody architecture structure according to claim 22, wherein the first installation part (20212) and the second installation part are weld nuts, the first connection part (2011) and the second connection part are connection holes, the first connecting member (2021) is fixedly connected to the upper crossbeam (201) through a bolt (207), and the second connecting member is fixedly connected to the upper crossbeam (201) through a bolt.

24. The underbody architecture structure according to claim 19, wherein each of the first connecting member (2021) and the second connecting member is further provided with a backing plate, wherein when the first connecting member (2021) is fixed with the upper crossbeam (201), the backing plate provided on the first connecting member (2021) is located between the first connecting member (2021) and the upper crossbeam (201), and when the second connecting member is fixed with the upper crossbeam (201), the backing plate provided on the second connecting member is located between the second connecting member and the upper crossbeam (201).

25. The underbody architecture structure according to claim 19, wherein the first connecting member (2021) comprises two first connecting sections (20211) opposite to each other, wherein the two first connecting sections (20211) enclose to form a hollow frame; and the second connecting member comprises two second connecting sections opposite to each other, wherein the two second connecting sections enclose to form a hollow frame.

26. The underbody architecture structure according to any one of claims 18 to 25, further comprising a water tank (206), wherein an upper part of the water tank (206) is connected to the upper crossbeam (201) through a buffer member (2013), and two sides of the water tank (206) are respectively connected to the first energy-absorbing box (102) and the second energy-absorbing box (10201) through a first support member (2041) and a second support member (2042).

27. The underbody architecture structure according to claim 26, wherein the upper part of the water tank (206) is provided with a connecting pin (208), and the upper crossbeam (201) is provided with a connecting port (2012), wherein the connecting pin (208) is fixed to the connecting port (2012) through the buffer member (2013) such that the water tank (206) is fixed with the upper crossbeam (201).

28. The underbody architecture structure according to claim 27, wherein the buffer member (2013) is provided with a clamping fixing part (20131), and the buffer member (2013) is clamped and fixed with the connecting port (2012) through the clamping fixing part (20131).

29. The underbody architecture structure according to claim 27 or 28, wherein the buffer member (2013) is provided with a clamping part (20132), and the connecting pin (208) is connected to the buffer member (2013) through the clamping part (20132).

30. The underbody architecture structure according to claim 29, wherein a material of the clamping part (20132) is a cushioning material.

31. The underbody architecture structure according to claim 26, wherein the first support member (2041) comprises a first water tank connection part (20411) and a first support part (20412) that are interconnected, and the second support member (2042) comprises a second water tank connection part (20421) and a second support part (20422) that are interconnected, wherein the first water tank connection part (20411) and the second water tank connection part (20421) are respectively connected to two sides of the water tank (206) through fasteners, and the first support part (20412) and the second support part (20422) are respectively connected to the first energy-absorbing box (102) and the second energy-absorbing box (10201) through fasteners.

32. The underbody architecture structure according to any one of claims 26 to 31, wherein the water tank (206) is inclined towards a rear of a vehicle.

33. A vehicle, wherein the vehicle comprises an underbody architecture structure according to any one of claims 1 to 32.
